# EUROPEAN PATENT APPLICATION

(11) **EP 4 844 029 A1**
(43) Date of publication of application: **25.11.2026**
(21) Application number: 24918492.0
(22) Date of filing: 11.12.2024
(51) Int. Cl.: C08L 101/10, C08K 5/29, C08K 5/5415, C08L 85/00

(54) **CURABLE COMPOSITION AND METHOD FOR PRODUCING SAME**

(30) Priority: 17.01.2024 JP 2024005255
(71) Applicant: KANEKA CORPORATION, Osaka-shi, Osaka 530-8288 (JP)
(72) Inventor: ZHANG, Dong, Hyogo 676-8688 (JP)
(74) Representative: Vossius & Partner Patentanwälte Rechtsanwälte mbB
(86) International application number: PCT/JP2024/043764
(87) International publication number: WO 2025/154435

(57) **Abstract**

Provided is a method for producing a curable composition containing an organic polymer (A) containing a reactive silicon group, an amidine structure-containing compound (b1), a titanium compound or condensation product thereof (b2), and a silane compound (b3) containing a hydrolyzable silicon group and an amino group and having a molecular weight of 100 to 1500. A catalyst-containing composition (B) is prepared by mixing the components (b1), (b2), and (b3), and the organic polymer (A) and the catalyst-containing composition (B) are mixed. The weight ratio (b3)/(b2) is from 0.1 to 2.

## Description

### Technical Field

The present invention relates to: a curable composition containing an organic polymer having a silicon group that contains a hydroxy or hydrolyzable group bonded to a silicon atom and is capable of forming a siloxane bond and hence a crosslink (the silicon group is hereinafter also referred to as a "reactive silicon group"); and a method for producing the curable composition.

### Background Art

An organic polymer having a reactive silicon group is known to undergo crosslinking to yield a rubbery cured product even at room temperature. This crosslinking results from siloxane bond formation involving a hydrolysis reaction of silyl groups induced by moisture or other factors. Such reactive silicon group-containing organic polymers have already been industrially produced and are widely used in various products such as sealing materials, adhesives, paints, and waterproofing materials.

A curable composition containing an organic polymer having a reactive silicon group typically further contains a curing catalyst (also referred to as a silanol condensation catalyst) such as an organotin compound which has a carbon-tin bond and a typical example of which is dibutyltin bis(acetylacetonate). The purpose of the curing catalyst is to complete the curing reaction in a short time. However, the use of organotin compounds requires careful attention in terms of environmental safety.

Thus, curing catalysts other than organotin compounds have been investigated. Patent Literature 1 describes the use of a combination of a titanium compound such as a titanium alkoxide or a titanium chelate compound and an amine compound such as DBU (1,8-diazabicyclo[5.4.0]undec-7-ene) as a curing catalyst for an organic polymer having a reactive silicon group. Paragraph [0220] of this literature teaches that the titanium compound and the amine compound are added individually to the reactive silicon group-containing organic polymer and that the components are subsequently mixed together.

It is also known that incorporating a low-molecular-weight silane compound (a so-called silane coupling agent) having a hydrolyzable silicon group and a reactive group such as an amino group or a vinyl group into a curable composition containing an organic polymer having a reactive silicon group improves the adhesion of the composition to various adherends and the storage stability of the composition.

### Citation List

### Patent Literature

PTL 1: Japanese Laid-Open Patent Application Publication No. 2014-114434

### Summary of Invention

### Technical Problem

The curing catalyst disclosed in Patent Literature 1 is formed by adding a titanium compound and an amine compound individually to a reactive silicon group-containing organic polymer. In contrast, the present inventor has investigated the mixing of a titanium compound and an amine compound before addition to a polymer and the use of the resulting mixture as a curing catalyst.

However, it has been discovered that the mixture of a titanium compound and an amine compound may become colored due to a reaction between the two components and that the color may darken over time after mixing. The color darkening is not desired for the appearance of the mixture for use as a curing catalyst or the appearance of the curable composition or the cured product.

In view of the above circumstances, the present invention aims to provide a method for producing a curable composition containing a reactive silicon group-containing organic polymer, the method being characterized in that a mixture of a titanium compound and an amine compound is used as a curing catalyst and that the mixture resists color darkening over time while maintaining its function as a curing catalyst.

### Solution to Problem

As a result of intensive studies aimed at solving the above problem, the present inventor has found that adding an amino group-containing silane compound to a mixture of a titanium compound and an amine compound can suppress color darkening of the mixture over time and that adding the mixture to a reactive silicon group-containing organic polymer enables the resulting composition to achieve good curability. Based on these findings, the inventor has completed the present invention.

Specifically, the present invention relates to a method for producing a curable composition containing an organic polymer (A), an amidine structure-containing compound (b1), a titanium compound or condensation product thereof (b2), and a silane compound (b3), wherein
the organic polymer (A) contains a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO-, the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the amidine structure-containing compound (b1) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the titanium compound (b2) is represented by the following formula (3): Ti(OR⁵)_{d}Y_{4-d} (3), wherein R⁵ is a substituted or unsubstituted hydrocarbon group having 1 to 20 carbon atoms, Y is a chelating ligand, and d is 0 or an integer from 1 to 4, and
the silane compound (b3) contains a hydrolyzable silicon group and an amino group and has a molecular weight of 100 to 1500,
the method including:
   a preparation step of preparing a catalyst-containing composition (B) by mixing the amidine structure-containing compound (b1), the titanium compound or condensation product thereof (b2), and the silane compound (b3); and
   a mixing step of mixing the organic polymer (A) and the catalyst-containing composition (B), wherein
   a weight ratio (b3)/(b2) of the silane compound (b3) to the titanium compound or condensation product thereof (b2) is from 0.1 to 2.

The present invention also relates to a curable composition containing an organic polymer (A) and a catalyst-containing composition (B), wherein
the organic polymer (A) contains the reactive silicon group,
the catalyst-containing composition (B) contains a composite of an amidine structure-containing compound (b1), a titanium compound or condensation product thereof (b2), and a silane compound (b3),
the amidine structure-containing compound (b1) is represented by the formula (2),
the titanium compound (b2) is represented by the formula (3),
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2. The present invention also relates to a cured product obtained by curing the curable composition.

The present invention further relates to a catalyst-containing composition (B) for an organic polymer (A) containing a reactive silicon group, the catalyst-containing composition (B) containing a composite of an amidine structure-containing compound (b1), a titanium compound or condensation product thereof (b2), and a silane compound (b3), wherein
the amidine structure-containing compound (b1) is represented by the formula (2),
the titanium compound (b2) is represented by the formula (3),
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2.

### Advantageous Effects of Invention

The present invention can provide a method for producing a curable composition containing a reactive silicon group-containing organic polymer, the method being characterized in that a mixture of a titanium compound and an amine compound is used as a curing catalyst and that the mixture resists color darkening over time while maintaining its function as a curing catalyst.

The present invention can further provide a tin-free catalyst-containing composition that resists color darkening over time and exhibits high curing activity as a curing catalyst for reactive silicon group-containing organic polymers. A preferred aspect can provide a catalyst-containing composition that is colorless and transparent.

One aspect of the present invention can provide a curable composition that cures into a cured product on the surface of which bleed-out of a component is suppressed.

One aspect of the present invention can provide a curable composition that resists delay in curing due to storage and exhibits good storage stability in terms of curability.

Furthermore, one aspect of the present invention can provide a curable composition having good adhesion.

Furthermore, one aspect of the present invention can provide a curable composition that exhibits good tensile properties after curing.

### Description of Embodiments

Embodiments of the present invention will be described in detail below.

### (Reactive Silicon Group-Containing Organic Polymer (A))

A reactive silicon group-containing organic polymer (A) includes a polymer backbone (also referred to as a main chain structure) and a polymer chain end bonded to the polymer backbone. The polymer backbone is a structure formed by the linking of monomer molecules through polymerization or condensation and consists of a series of monomer units. The polymer backbone may contain one type of monomer or different types of monomers linked together.

The "polymer chain end" refers to a moiety present at an end of the reactive silicon group-containing organic polymer (A). The number of polymer chain ends in the reactive silicon group-containing organic polymer (A) is two when the entire polymer backbone is linear and three or more when the entire polymer backbone is branched. When the polymer backbone is a mixture of a linear backbone and a branched backbone, the average number of polymer chain ends may be between two and three.

The reactive silicon group of the organic polymer (A) may be present in the polymer backbone and/or the polymer chain end. Two or more reactive silicon groups may be present in one polymer chain end. When the curable composition according to the present disclosure is used as an adhesive, a sealing material, an elastic coating material, or a pressure-sensitive adhesive, the reactive silicon group is preferably contained in the polymer chain end of the organic polymer (A).

The organic polymer (A) has a reactive silicon group represented by the following formula (1).

-SiR¹₃₋ₐXₐ (1),

wherein
R¹ is a substituted or unsubstituted hydrocarbon group having 1 to 20 carbon atoms or a triorganosiloxy group represented by R⁰₃SiO-, the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different.

Examples of R¹ in the formula (1) include: alkyl groups such as methyl and ethyl groups; alkyl groups having a heteroatom-containing group, such as chloromethyl, methoxymethyl, and 3,3,3-trifluoropropyl groups; cycloalkyl groups such as a cyclohexyl group; aryl groups such as a phenyl group; aralkyl groups such as a benzyl group; and triorganosiloxy groups represented by R⁰₃SiO-, wherein R⁰ is, for example, a methyl group or a phenyl group. R¹ is preferably an alkyl group or an alkyl group having a heteroatom-containing group, more preferably a methyl group, an ethyl group, a chloromethyl group, or a methoxymethyl group, even more preferably a methyl group or an ethyl group, and particularly preferably a methyl group. When there are a plurality of R¹ groups, they may be the same or different.

X in the formula (1) is a hydroxy group or a hydrolyzable group. The hydrolyzable group is not limited to a particular group and may be any known hydrolyzable group. Examples include a hydrogen atom, halogen atoms, and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups are more preferred in terms of moderate hydrolyzability and ease of handling. Methoxy and ethoxy groups are even more preferred, and a methoxy group is particularly preferred. When there are a plurality of X groups, they may be the same or different.

The integer a is 1, 2, or 3. The integer a is preferably 2 or 3. In order to further improve curability, a is particularly preferably 3.

Examples of the reactive silicon group represented by the formula (1) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, dimethoxyphenylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, dimethoxymethylsilyl and trimethoxysilyl groups are preferred for ease of synthesis. Trimethoxysilyl and (methoxymethyl)dimethoxysilyl groups are preferred to achieve high curability. Trimethoxysilyl and triethoxysilyl groups are preferred to obtain a cured product that exhibits a high recovery rate or a low water absorption rate.

### (Main Chain Structure of Reactive Silicon Group-Containing Organic Polymer (A))

The main chain structure (also referred to as the polymer backbone) of the reactive silicon group-containing organic polymer (A) is not limited to a particular type, and various main chain structures may be used. Specific examples include: polyoxyalkylene polymers such as polyoxyethylene, polyoxypropylene, polyoxybutylene, polyoxytetramethylene, polyoxyethylene-polyoxypropylene copolymers, and polyoxypropylene-polyoxybutylene copolymers; hydrocarbon polymers such as ethylene-propylene copolymers, polyisobutylene, copolymers of isobutylene and isoprene, and hydrogenated polyolefin polymers obtained by hydrogenation of these polyolefin polymers; polyester polymers obtained by condensation of a dibasic acid such as adipic acid and a glycol or obtained by ring-opening polymerization of lactones; (meth)acrylic ester polymers obtained by radical polymerization of (meth)acrylic ester monomers such as methyl (meth)acrylate, ethyl (meth)acrylate, butyl (meth)acrylate, 2-ethylhexyl (meth)acrylate, and stearyl (meth)acrylate; vinyl copolymers obtained by radical polymerization of monomers such as (meth)acrylic ester monomers, vinyl acetate, acrylonitrile, and styrene; polysulfide polymers; polyamide polymers; polycarbonate polymers; and diallyl phthalate polymers. The terms "(meth)acrylic" and "(meth)acrylate" as used above refer to "acrylic and/or methacrylic" and "acrylate and/or methacrylate."

Among the polymers mentioned above, saturated hydrocarbon polymers such as polyisobutylene, hydrogenated polyisoprene, and hydrogenated polybutadiene, polyoxyalkylene polymers, and (meth)acrylic ester polymers are preferred because they have a relatively low glass transition temperature and their use results in a cured product having high cold resistance. One of these polymers may be used alone, or two or more thereof may be used in combination.

Polyoxyalkylene polymers and (meth)acrylic ester polymers are particularly preferred because they have high moisture permeability and their use allows the curable composition prepared as a one-part composition to exhibit high depth curability and high adhesion. Polyoxyalkylene polymers are more preferred, and polyoxypropylene is even more preferred.

(Meth)acrylic ester polymers are advantageous because their monomer composition can be changed in various combinations to provide benefits such as improving adhesion, enhancing heat resistance and weather resistance, and reducing the water absorption of the cured product obtained by curing the curable composition.

Preferred is a polyoxyalkylene polymer having a repeating unit represented by -R-O-, wherein R is a linear or branched alkylene group having 1 to 14 carbon atoms. R is more preferably a linear or branched alkylene group having 2 to 4 carbon atoms. Specific examples of the repeating unit represented by -R-O- include -CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene polymer may be made up of only one type of repeating units or two or more types of repeating units.

In particular, when the curable composition according to the present disclosure is used as a sealant, an adhesive, or the like, a polyoxypropylene polymer in which oxypropylene repeating units constitute 50 wt% or more, more preferably 80 wt% or more, of the main chain structure of the polymer is preferred because such a polyoxypropylene polymer is amorphous and has a relatively low viscosity.

The main chain structure of the polyoxyalkylene polymer may be linear or branched. When the main chain structure is branched, the number of branches is preferably from 1 to 6 (this means that the number of terminal hydroxy groups is from 3 to 8), more preferably from 1 to 4 (this means that the number of terminal hydroxy groups is from 3 to 6), and most preferably 1 (this means that the number of terminal hydroxy groups is 3). By having a branched main chain structure, the polyoxyalkylene polymer can provide an enhancing effect on the recovery performance of the cured product. In addition, the polyoxyalkylene polymer can be expected to have a reducing effect on the water absorption of the cured product. When the main chain structure is branched and the reactive silicon group is a trimethoxysilyl group, a cured product that exhibits a particularly low water absorption rate can be obtained.

The polyoxyalkylene polymer is preferably a polymer obtained by subjecting a cyclic ether compound to ring-opening polymerization using a polymerization catalyst in the presence of an initiator.

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among cyclic ether compounds, propylene oxide is particularly preferred because, with its use, a polyether polymer that is amorphous and has a relatively low viscosity can be obtained.

Specific examples of the initiator include: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and hydroxy-terminated polyoxyalkylene polymers such as polyoxypropylene diol, polyoxypropylene triol, polyoxyethylene diol, and polyoxyethylene triol which have a number-average molecular weight of 300 to 4,000.

Examples of methods for polyoxyalkylene polymer synthesis include, but are not limited to: a polymerization method using an alkali catalyst such as KOH; a polymerization method taught in Japanese Laid-Open Patent Application Publication No. S61-215623, which uses a transition metal compound-porphyrin complex catalyst such as a complex obtained by a reaction between an organoaluminum compound and porphyrin; a polymerization method taught in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method illustrated in Japanese Laid-Open Patent Application Publication No. H10-273512, which uses a catalyst composed of a polyphosphazene salt; and a polymerization method illustrated in Japanese Laid-Open Patent Application Publication No. H11-060722, which uses a catalyst composed of a phosphazene compound. The polymerization method using a double metal cyanide complex catalyst is more preferred, for example, in terms of production cost or for obtaining a polymer having a narrow molecular weight distribution.

The reactive silicon group-containing organic polymer (A) may be a polyoxyalkylene polymer whose main chain structure contains other bonds such as urethane bonds or urea bonds to an extent that does not significantly diminish the effects of the invention. Specific examples of such a polymer include polyurethane prepolymers.

A polyurethane prepolymer can be obtained by a known method, an example of which is a reaction between a polyol compound and a polyisocyanate compound.

Specific examples of the polyol compound include polyether polyol, polyester polyol, polycarbonate polyol, and polyether polyester polyol.

Specific examples of the polyisocyanate compound include diphenylmethane diisocyanate, tolylene diisocyanate, xylylene diisocyanate, methylene-bis(cyclohexyl isocyanate), isophorone diisocyanate, and hexamethylene diisocyanate.

The polyurethane prepolymer may be terminated with either hydroxy groups or isocyanate groups.

In order to obtain a curable composition having high storage stability and high workability, the reactive silicon group-containing organic polymer (A) is particularly preferably a polyoxyalkylene polymer whose main chain structure does not contain urethane bonds, urea bonds, ester bonds, or amide bonds.

Preferably, the reactive silicon group-containing organic polymer (A) is obtained by introducing reactive silicon groups into a polymer using any of the following methods (a) to (d).
(a) A method in which terminal hydroxy groups of a hydroxy-terminated organic polymer are converted into unsaturated carbon-carbon bond-containing groups and then the unsaturated carbon-carbon bond-containing groups are reacted with HSiR¹₃₋ₐXₐ (R¹, X, and a are as defined in the formula (1)).
(b) A method in which terminal hydroxy groups of a hydroxy-terminated organic polymer are reacted with an isocyanate group-containing silane compound represented by OCN-W-SiR¹₃₋ₐXₐ (W is a divalent organic group, and R¹, X, and a are as defined in the formula (1)).
(c) A method in which terminal hydroxy groups of a hydroxy-terminated organic polymer are converted into unsaturated carbon-carbon bond-containing groups and then the unsaturated carbon-carbon bond-containing groups are reacted with a mercapto group-containing silane compound represented by HS-W-SiR¹₃₋ₐXₐ (W is a divalent organic group, and R¹, X, and a are as defined in the formula (1)).
(d) A method in which a hydroxy-terminated organic polymer is reacted with a polyisocyanate compound to synthesize an NCO-terminated organic polymer and then the NCO-terminated organic polymer is reacted with a silane compound represented by HNR-W-SiR¹₃₋ₐXₐ (W is a divalent organic group, R is hydrogen or an alkyl group, and R¹, X, and a are as defined in the formula (1)) or HS-W-SiR¹₃₋ₐXₐ (W is a divalent organic group, and R¹, X, and a are as defined in the formula (1)).

Examples of the terminal unsaturated carbon-carbon bond-containing groups in the methods (a) and (c) include vinyl, allyl, methallyl, allenyl, and propargyl groups.

The reactive silicon group-containing organic polymer (A) is preferably obtained by any one of the above methods using a silane compound represented by a corresponding one of the above formulae wherein W is a methylene group, because in this case the resulting reactive silicon group-containing organic polymer (A) exhibits very high curability.

The method (a) is preferred because it tends to yield a reactive silicon group-containing organic polymer (A) having good storage stability. The methods (b), (c), and (d) are preferred because they can achieve a high conversion rate in a relatively short reaction time.

Examples of reactive silicon group introduction by the method (a) include: reactive silicon group introduction proposed in publications such as Japanese Examined Patent Application Publication No. S45-36319, Japanese Examined Patent Application Publication No. S46-12154, Japanese Laid-Open Patent Application Publication No. S50-156599, Japanese Laid-Open Patent Application Publication No. S54-6096, Japanese Laid-Open Patent Application Publication No. S55-13767, Japanese Laid-Open Patent Application Publication No. S55-13468, Japanese Laid-Open Patent Application Publication No. S57-164123, Japanese Examined Patent Application Publication No. H3-2450, U.S. Patent No. 3632557, U.S. Patent No. 4345053, U.S. Patent No. 4366307, and U.S. Patent No. 4960844; reactive silicon group introduction proposed in publications such as Japanese Laid-Open Patent Application Publication No. S61-197631, Japanese Laid-Open Patent Application Publication No. S61-215622, Japanese Laid-Open Patent Application Publication No. S61-215623, and Japanese Laid-Open Patent Application Publication No. S61-218632, in which reactive silicon groups are introduced by hydrosilylation or the like into a polyoxypropylene polymer having a high molecular weight and a narrow molecular weight distribution, specifically a polyoxypropylene polymer having a number-average molecular weight of 6,000 or more and an Mw/Mn of 1.6 or less; and reactive silicon group introduction proposed in Japanese Laid-Open Patent Application Publication No. H3-72527.

The dispersity (Mw/Mn) of the reactive silicon group-containing organic polymer (A) is not limited to a particular range, but is preferably 1.6 or less, more preferably 1.5 or less, and particularly preferably 1.4 or less. The dispersity is preferably 1.2 or less in order to improve various mechanical properties such as durability and elongation of the cured product.

The number-average molecular weight of the reactive silicon group-containing organic polymer (A), as expressed as a polystyrene-equivalent molecular weight determined by GPC analysis, is preferably from 3,000 to 100,000, more preferably from 5,000 to 50,000, and particularly preferably from 8,000 to 35,000. When the number-average molecular weight is within these ranges, the cured product can have excellent mechanical properties. In addition, the amount of reactive silicon groups to be introduced is moderate, and this makes it possible to obtain an organic polymer (A) that exhibits good curability and that has a viscosity suitable for handling and high workability while controlling the production cost in a desired range.

The molecular weight of the reactive silicon group-containing organic polymer (A) can also be expressed as an end group-equivalent molecular weight, which is determined by directly measuring the end group concentration through titration analysis based on the principles of the hydroxy value measurement method as specified in JIS K 1557 and the iodine value measurement method as specified in JIS K 0070 and by making a calculation taking into account the architecture of the organic polymer (the degree of branching which depends on the polymerization initiator used). The end group-equivalent molecular weight of the organic polymer (A) can also be determined by creating a calibration curve representing the relationship between the number-average molecular weight of the polymer precursor as determined by conventional GPC analysis and the end group-equivalent molecular weight, determining the number-average molecular weight of the organic polymer (A) by GPC analysis, and converting the determined number-average molecular weight into the end group-equivalent molecular weight based on the calibration curve.

To obtain a favorable rubbery cured product, the reactive silicon groups of the organic polymer (A) are preferably present in the polymer chain ends. To allow the organic polymer (A) to have good curability and exhibit a rubbery elastic behavior, the number of the reactive silicon groups in the organic polymer (A) is preferably 0.5 or more, more preferably 0.6 or more, even more preferably 0.7 or more, and particularly preferably 0.8 or more on average per polymer chain end.

The number of the polymer chain ends per molecule in the organic polymer (A) is preferably from 2 to 8, more preferably from 2 to 4, and particularly preferably 2 or 3.

The number of the reactive silicon groups per molecule in the organic polymer (A) is preferably from 1 to 7, more preferably from 1 to 3.4, and particularly preferably from 1 to 2.6 on average.

When the reactive silicon group-containing organic polymer (A) is branched, the reactive silicon groups may be located at the ends of the main chain of the organic polymer, at the ends of the side chains (branches) of the organic polymer, or at the ends of both the main and side chains. In particular, it is preferable for the reactive silicon groups to be present at the ends of the main chain because, in this case, the molecular weight between crosslinks is increased and consequently a rubbery cured product that exhibits high strength, high elongation, and low elastic modulus is likely to be obtained.

As described in WO 2013/180203 A1, the organic polymer (A) has two or more reactive silicon groups per polymer chain end when obtained by the method (a) or (c) using an organic polymer having two or more unsaturated carbon-carbon bonds per polymer chain end. Such an organic polymer (A) exhibits high curability, and its use is expected to result in a cured product having high strength and high recovery performance.

Specific examples of commercially available products corresponding to the reactive silicon group-containing organic polymer (A) include: reactive silicon group-containing polyoxypropylene products such as "Kaneka MS Polymer" and "Kaneka Silyl" manufactured by Kaneka Corporation; reactive silicon group-containing poly(meth)acrylic esters such as "Kaneka TA Polymer" and "Kaneka XMAP" manufactured by Kaneka Corporation; and reactive silicon group-containing polyisobutylene such as "Kaneka EPION" manufactured by Kaneka Corporation.

### (Catalyst-Containing Composition (B))

The curable composition according to the present disclosure contains a catalyst-containing composition (B) used to form a cured product by hydrolyzing and condensing the reactive silicon groups of the organic polymer (A).

The catalyst-containing composition (B) is composed of an amidine structure-containing compound (b1), a titanium compound or condensation product thereof (b2), and an amino group-containing silane compound (b3), and at least these three components are mixed in advance. The phrase "mixed in advance" means that the amidine structure-containing compound (b1), the titanium compound or condensation product thereof (b2), and the amino group-containing silane compound (b3) are mixed in the absence of the organic polymer (A) before the three components are added to and mixed with the organic polymer (A). This phrase is intended to distinguish the mixing process from that as described in Patent Literature 1, in which the components are added individually to the organic polymer (A) and all the components are subsequently mixed together.

It is inferred that when the amidine structure-containing compound (b1) and the titanium compound or condensation product thereof (b2) are mixed, an interaction between the components (b1) and (b2) leads to the formation of a certain active species, and mixing of this active species with the organic polymer (A) can improve curability. Furthermore, since the components (b1) and (b2) interact with each other when being mixed in advance, bleed-out of the component (b1) from the surface of the cured product can be suppressed.

However, the reaction between the amidine structure-containing compound (b1) and the titanium compound or condensation product thereof (b2) yields a colored mixture of the components (b1) and (b2), and the color of the mixture tends to darken over time before the mixture is added to the organic polymer (A).

In the present embodiment, the amino group-containing silane compound (b3) is further mixed with the amidine structure-containing compound (b1) and the titanium compound or condensation product thereof (b2). As a result, color darkening of the resulting mixture over time can be suppressed. This is presumably because the component (b3) influences the interaction between the components (b1) and (b2), thereby inhibiting the reaction that causes coloration.

The method for mixing the amidine structure-containing compound (b1), the titanium compound or condensation product thereof (b2), and the amino group-containing silane compound (b3) is not limited to a particular technique. The components may be mixed and stirred at room temperature or under heating at a temperature lower than the decomposition temperatures of the components. The mixing may be performed in the absence of any solvent or in the presence of a solvent that is inert to the components. Furthermore, the mixing may be performed under an atmosphere of an inert gas (such as nitrogen gas or argon gas) or in the presence of air. The time of mixing under stirring is not limited to a particular range and may be, for example, from about 1 hour to about 3 days.

The mixing of the three components is not limited to a particular order. The three components may be added individually and then all mixed together. Alternatively, the components (b1) and (b2) may be mixed first, and the component (b3) may then be added to and mixed with the mixture of the components (b1) and (b2). Alternatively, the components (b1) and (b3) may be mixed first, and the component (b2) may then be added to and mixed with the mixture of the components (b1) and (b3). Alternatively, the components (b2) and (b3) may be mixed first, and the component (b1) may then be added to and mixed with the mixture of the components (b2) and (b3).

In a preferred aspect, the mixing of the amidine structure-containing compound (b1), the titanium compound or condensation product thereof (b2), and the amino group-containing silane compound (b3) in advance can lead to the formation of a composite of the components (b1), (b2), and (b3). The "composite" refers to a material in which the components (b1), (b2), and (b3) are not independent of one another but in which a reaction has occurred to form a chemical bond between at least two of the components (b1), (b2), and (b3) or to cause a structural change in at least one of the components (b1), (b2), and (b3). The composite can be formed by mixing the components (b1), (b2), and (b3) under stirring in the manner described above. The mixing under stirring causes the resulting mixture to become viscous. This phenomenon indicates the formation of the composite.

### (Amidine Structure-Containing Compound (b1))

The amidine structure-containing compound can be represented by the following formula (2).

R²N=CR³-NR⁴₂ (2),

wherein
R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure.

In order to enhance the curability of the curable composition, R² is preferably a hydrogen atom or a hydrocarbon group having 1 to 20 carbon atoms and more preferably a hydrocarbon group in which the carbon atom (the α-position carbon atom) adjacent to the nitrogen atom does not have an unsaturated bond. In view of high availability, the number of carbon atoms in R² is preferably from 1 to 10 and more preferably from 1 to 6.

In order to enhance the curability of the curable composition, R³ is preferably a hydrogen atom or an organic group represented by -NR⁶₂ and more preferably an organic group represented by -NR⁶₂. The two R⁶ groups are each independently a hydrogen atom or an organic group having 1 to 20 carbon atoms. In this case, the compound represented by the formula (2) is called a guanidine compound.

In order for the resulting cured product to have good physical properties, R³ is preferably an organic group represented by -NR⁷-C(=NR⁸)-NR⁹₂ or -N=C(NR¹⁰₂)-NR¹¹₂. R⁷, R⁸, and the two R⁹ groups are each independently a hydrogen atom or an organic group having 1 to 6 carbon atoms. The two R¹⁰ groups and the two R¹¹ groups are each independently a hydrogen atom or an organic group having 1 to 6 carbon atoms. In this case, the compound represented by the formula (2) is called a biguanide compound.

In view of high availability and the enhancement of the curability of the curable composition, each of the two R⁴ groups in the formula (2) is preferably a hydrogen atom or a hydrocarbon group having 1 to 20 carbon atoms and more preferably a hydrogen atom or a hydrocarbon group having 1 to 10 carbon atoms.

The number of carbon atoms in the amidine structure-containing compound is preferably 2 or more, more preferably 6 or more, and particularly preferably 7 or more. The upper limit of the number of carbon atoms is not limited to a particular value, but the number of carbon atoms is preferably up to 10,000.

The molecular weight of the amidine structure-containing compound is preferably 60 or more, more preferably 120 or more, and particularly preferably 130 or more. The upper limit of the molecular weight is not limited to a particular value, but the molecular weight is preferably up to 100,000.

Examples of the amidine structure-containing compound (b1) include, but are not limited to:
pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine;
imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one;
amidine compounds such as 1,8-diazabicyclo[5.4.0]undec-7-ene (DBU), 1,5-diazabicyclo[4.3.0]non-5-ene (DBN), 2,9-diazabicyclo[4.3.0]nona-1,3,5,7-tetraene, and 6-(dibutylamino)-1,8-diazabicyclo[5.4.0]undec-7-ene (DBA-DBU);
guanidine compounds such as guanidine, dicyandiamide, 1-methylguanidine, 1-ethylguanidine, 1-cyclohexylguanidine, 1-phenylguanidine, 1-(o-tolyl)guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-n-octyl-1,5,7-triazabicyclo[4.4.0]dec-5-ene; and
biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-N2-ethylbiguanide, 1,1'-ethylenebisbiguanide, 1,5-ethylenebiguanide, 1-[3-(diethylamino)propyl]biguanide, 1-[3-(dibutylamino)propyl]biguanide, and N',N"-dihexyl-3,12-diimino-2,4,11,13-tetraazatetradecanediamidine.

One amidine structure-containing compound (b1) may be used alone, or two or more amidine structure-containing compounds (b1) may be used in combination.

In order to further improve curability, the amidine structure-containing compound (b1) is preferably an amidine compound or a guanidine compound, more preferably DBU, DBA-DBU, DBN, or phenylguanidine, even more preferably DBU, DBA-DBU, or DBN, and particularly preferably DBU.

### (Titanium Compound or Condensation Product Thereof (b2))

The titanium compound (b2) is represented by the following formula (3).

Ti(OR⁵)_{d}Y_{4-d} (3),

wherein
R⁵ is a substituted or unsubstituted hydrocarbon group having 1 to 20 carbon atoms, Y is a chelating ligand, and d is 0 or an integer from 1 to 4.

A condensation product of the titanium compound represented by the formula (3) may also be used as the component (b2). The condensation product can be obtained by adding and reacting water with the titanium compound. In order to further improve curability, the component (b2) is preferably the condensation product of the titanium compound. The titanium compound and the condensation product of the titanium compound may be used in combination.

The substituted or unsubstituted hydrocarbon group represented by R⁵ is preferably a substituted or unsubstituted aliphatic or aromatic hydrocarbon group and more preferably a substituted or unsubstituted aliphatic hydrocarbon group. The aliphatic hydrocarbon group may be, for example, a saturated or unsaturated hydrocarbon group. The saturated hydrocarbon group is preferably a linear or branched alkyl group. The number of carbon atoms in the hydrocarbon group is preferably from 1 to 10, more preferably from 1 to 6, and even more preferably from 1 to 4.

Examples of the hydrocarbon group represented by R⁵ include methyl, ethyl, propyl, isopropyl, butyl, isobutyl, *sec*-butyl, *tert*-butyl, pentyl, hexyl, heptyl, octyl, 2-ethylhexyl, nonyl, and decyl groups. Examples of substituents with which the hydrocarbon group may be substituted include methoxy, ethoxy, hydroxy, and acetoxy groups. When there are a plurality of R⁵ groups, they may be the same or different.

The chelating ligand represented by Y may be any compound known to be coordinated to titanium. Examples of such compounds include, but are not limited to: diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; ketoesters such as methyl acetoacetate, ethyl acetoacetate, butyl acetoacetate, *t*-butyl acetoacetate, and ethyl 3-oxohexanoate; ketoamides such as *N*,*N*-dimethylacetoacetamide, *N*,*N*-diethylacetoacetamide, and acetoacetanilide; malonic esters such as dimethyl malonate, diethyl malonate, and diphenyl malonate; and malonamides such as *N*,*N*,*N*',*N'*-tetramethylmalonamide and *N*,*N*,*N'*,*N'*-tetraethylmalonamide. Among these, diketones and ketoesters are preferred. When there are a plurality of ligands represented by Y, they may be the same or different.

The subscript d is 0 or an integer from 1 to 4. In order for the curable composition according to the present disclosure to exhibit better curability and for the cured product of the composition to exhibit high elongation, d is preferably 0 or an integer from 1 to 3, more preferably an integer from 1 to 3, and particularly preferably 2.

Specific examples of the titanium compound represented by the formula (3) or the condensation product thereof include: tetramethoxytitanium, trimethoxyethoxytitanium, trimethoxyisopropoxytitanium, trimethoxybutoxytitanium, dimethoxydiethoxytitanium, dimethoxydiisopropoxytitanium, dimethoxydibutoxytitanium, methoxytriethoxytitanium, methoxytriisopropoxytitanium, methoxytributoxytitanium, tetraethoxytitanium, triethoxyisopropoxytitanium, triethoxybutoxytitanium, diethoxydiisopropoxytitanium, diethoxydibutoxytitanium, ethoxytriisopropoxytitanium, ethoxytributoxytitanium, tetraisopropoxytitanium, triisopropoxybutoxytitanium, diisopropoxydibutoxytitanium, tetrabutoxytitanium, tetra-*tert*-butoxytitanium, diisopropoxytitanium bis(acetylacetonate), diisopropoxytitanium bis(ethyl acetoacetate), and diisobutoxytitanium bis(ethyl acetoacetate); and titanium alkoxide condensation products such as tetrabutoxytitanium dimer and tetrabutoxytitanium tetramer. One titanium compound or a condensation product thereof may be used alone, or two or more titanium compounds or condensation products thereof may be used in combination.

In order for the curable composition to have good curability and for the cured product of the composition to exhibit high elongation, the titanium compound represented by the formula (3) is preferably a compound containing the chelating ligand represented by Y. Specifically, the titanium compound is particularly preferably diisopropoxytitanium bis(acetylacetonate), diisopropoxytitanium bis(ethyl acetoacetate), or diisobutoxytitanium bis(ethyl acetoacetate).

### (Amino Group-Containing Silane Compound (b3))

The amino group-containing silane compound (b3) is a silane compound containing a hydrolyzable silicon group and an amino group and having a molecular weight of 100 to 1500. This compound may also be referred to as a silane coupling agent and is typically used as an adhesion promoter to improve adhesion of curable compositions to various adherends. In the present embodiment, the compound (b3) serves as a component for suppressing color darkening of the catalyst-containing composition (B) over time.

The hydrolyzable silicon group of the amino group-containing silane compound (b3) is a group containing a silicon atom to which a hydrolyzable group is bonded, and can be represented by the formula (1) described above for the reactive silicon group of the organic polymer (A).

Examples of the hydrolyzable group contained in the hydrolyzable silicon group include, but are not limited to, a hydrogen atom, halogen atoms, and alkoxy, aryloxy, alkenyloxy, acyloxy, ketoximate, amino, amide, acid amide, aminooxy, and mercapto groups. Among these, alkoxy groups such as methoxy and ethoxy groups are more preferred in terms of moderate hydrolyzability and ease of handling, and methoxy and ethoxy groups are particularly preferred.

The number of hydrolyzable groups bonded to the silicon atom in the amino group-containing silane compound (b3) may be preferably three to ensure good adhesion. To ensure the storage stability of the curable composition, the number of hydrolyzable groups may be preferably two.

The molecular weight of the amino group-containing silane compound (b3) is in the range of 100 to 1,500. The molecular weight may be at least 150. The molecular weight may be up to 1,000 or up to 500.

The amino group-containing silane compound (b3) is a compound having a hydrolyzable silicon group and a substituted or unsubstituted amino group and may also be referred to as an aminosilane. Examples of the substituent of the substituted amino group include, but are not limited to, alkyl, aralkyl, and aryl groups.

Specific examples of the amino group-containing silane compound (b3) include: amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-(2-aminoethyl)aminoethyl)aminopropyltrimethoxysilane, γ-(6-aminohexyl)aminopropyltrimethoxysilane, 3-(*N*-ethylamino)-2-methylpropyltrimethoxysilane, γ-ureidopropyltrimethoxysilane, γ-ureidopropyltriethoxysilane, *N*-phenyl-γ-aminopropyltrimethoxysilane, *N*-benzyl-γ-aminopropyltrimethoxysilane, *N*-vinylbenzyl-γ-aminopropyltriethoxysilane, *N*-cyclohexylaminomethyltriethoxysilane, *N*-cyclohexylaminomethyldiethoxymethylsilane, *N*-phenylaminomethyltrimethoxysilane, *N*-butylaminopropyltrimethoxysilane, (2-aminoethyl)aminomethyltrimethoxysilane, *N*,*N'*-bis[3-(trimethoxysilyl)propyl]ethylenediamine, and bis(trimethoxysilylpropyl)amine; and ketimine-type silanes such as *N*-(1,3-dimethylbutylidene)-3-(triethoxysilyl)-1-propanamine. A partial hydrolysis-condensation product of any of the above-mentioned amino group-containing silanes or a partial hydrolysis-condensation product of any of the above-mentioned amino group-containing silanes and another alkoxysilane (such as a reaction product of an amino group-containing silane and an epoxy group-containing silane or a reaction product of an amino group-containing silane and a (meth)acrylic group-containing silane) may also be used. One amino group-containing silane compound (b3) may be used alone, or two or more amino group-containing silane compounds (b3) may be used in combination.

In order to achieve good adhesion, the amino group-containing silane compound (b3) is preferably γ-aminopropyltrimethoxysilane, γ-(2-aminoethyl)aminopropyltrimethoxysilane, or γ-(2-aminoethyl)aminopropylmethyldimethoxysilane. A silane coupling agent formed as an oligomer through partial condensation of hydrolyzable silicon groups is suitable for use in terms of safety and stability. One silane coupling agent may be subjected to condensation, or two or more silane coupling agents may be subjected to condensation. Examples of the silane coupling agent formed as an oligomer include Dynasylan 1146 manufactured by Evonik. To ensure the storage stability of the curable composition, γ-aminopropyltrimethoxysilane and γ-(2-aminoethyl)aminopropylmethyldimethoxysilane are preferred.

The amount of the amino group-containing silane compound (b3) is defined relative to that of the titanium compound or condensation product thereof (b2). The weight ratio (b3)/(b2) of the component (b3) to the component (b2) is in the range of 0.1 to 2. By setting the weight ratio (b3)/(b2) within this range, color darkening of the catalyst-containing composition (B) over time can be suppressed. In addition, the composition (B) can exhibit high curing activity as a curing catalyst for reactive silicon group-containing organic polymers. When the weight ratio (b3)/(b2) is less than 0.1, it is difficult to suppress color darkening over time.

In view of color darkening suppression, the weight ratio (b3)/(b2) is preferably at least 0.15, more preferably at least 0.2, and even more preferably at least 0.25. To render the catalyst-containing composition (B) colorless and transparent, the weight ratio (b3)/(b2) is preferably 0.3 or more and more preferably 0.5 or more. To enhance curability, the weight ratio (b3)/(b2) is preferably up to 1.5, more preferably up to 1, and even more preferably up to 0.8.

In the curable composition according to the present disclosure, the amount of the catalyst-containing composition (B) may be selected as appropriate depending on the desired level of curability. For example, the amount of the catalyst-containing composition (B) may be from about 0.1 to about 20 parts by weight per 100 parts by weight of the reactive silicon group-containing organic polymer (A), and is preferably from 0.5 to 15 parts by weight, more preferably from 0.75 to 10 parts by weight, and even more preferably from 1 to 8 parts by weight.

The amount of the amidine structure-containing compound (b1) contained in the curable composition according to the present disclosure may be adjusted as appropriate within the range specified above. To enhance the effect of suppressing the bleed-out of the component (b1), the amount of the component (b1) is preferably 2 parts by weight or less, more preferably 1 part by weight or less, and even more preferably 0.7 parts by weight or less per 100 parts by weight of the reactive silicon group-containing organic polymer (A). In view of curability, the amount of the component (b1) is preferably at least 0.1 parts by weight, more preferably at least 0.3 parts by weight, even more preferably at least 0.4 parts by weight, and particularly preferably at least 0.5 parts by weight.

The proportions of the amidine structure-containing compound (b1) and the titanium compound or condensation product thereof (b2) may be set as appropriate. For example, the weight ratio (b2)/(b1) may be from about 0.1 to about 20, and is preferably from 0.5 to 15, more preferably from 0.8 to 12, and even more preferably from 1.0 to 10. In order to particularly enhance the curability-improving effect, the weight ratio is preferably up to 9, more preferably up to 6, even more preferably up to 5, and particularly preferably up to 4. In order to enhance the effect of suppressing the bleed-out of the component (b1), the weight ratio is preferably at least 1.5, more preferably at least 2, and even more preferably at least 2.6.

The curable composition according to the present disclosure may contain a curing catalyst other than the catalyst-containing composition (B). Examples of the other curing catalyst include organotin compounds, metal carboxylates, amine compounds other than the amidine structure-containing compound (b1), carboxylic acids, metal alkoxides other than the titanium compound or condensation product thereof (b2), and inorganic acids.

The amount of the curing catalyst other than the catalyst-containing composition (B) is not limited to a particular range, and may be set as appropriate. For example, the amount of the other catalyst may be from 0 to 10 parts by weight, from 0 to 5 parts by weight, from 0 to 3 parts by weight, or from 0 to 1 part by weight per 100 parts by weight of the reactive silicon group-containing organic polymer (A). In particular, the amount of organotin compounds used is preferably minimized for environmental safety, and is preferably from 0 to 1 part by weight and more preferably from 0 to 0.1 parts by weight.

### (Silane Compound (C) and/or Silane Compound (D))

The curable composition according to the present disclosure preferably further contains a silane compound (C) containing a hydrolyzable silicon group and an amino group and having a molecular weight of 100 to 1500, and/or a silane compound (D) containing a hydrolyzable silicon group, being free of an amino group, and having a molecular weight of 100 to 1500. These silane compounds are also referred to as silane coupling agents.

The incorporation of the silane compound (C) and/or the silane compound (D) can enhance the adhesion of the curable composition to various adherends and improve the storage stability of the curable composition. The curable composition according to the present disclosure may contain the silane compound (C) alone, the silane compound (D) alone, or both the silane compound (C) and the silane compound (D). The curable composition may contain neither the silane compound (C) nor the silane compound (D).

The details of the silane compound (C) are the same as those of the amino group-containing silane compound (b3) described above, and will therefore not be described below. In this specification, an amino group-containing silane compound contained in the catalyst-containing composition (B) is denoted as (b3), and an amino group-containing silane compound that is not contained in the catalyst-containing composition (B) but is incorporated in the curable composition is denoted as (C). The same compound may be used as the components (b3) and (C), or different compounds may be used as the components (b3) and (C).

The silane compound (D), which contains a hydrolyzable silicon group and does not contain an amino group, may be a compound containing a hydrolyzable silicon group and a reactive group other than an amino group, or a compound containing a hydrolyzable silicon group and free of any reactive group other than the hydrolyzable silicon group.

The type and number of hydrolyzable silicon groups contained in the silane compound (D), and the molecular weight of the compound (D), are the same as those described above with respect to the amino group-containing silane compound (b3), and will therefore not be described below.

Specific examples of the silane compound (D) include:
epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane;
isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, and (isocyanatomethyl)dimethoxymethylsilane;
mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, and mercaptomethyltriethoxysilane;
carboxysilanes such as β-carboxyethyltriethoxysilane, β-carboxyethylphenylbis(2-methoxyethoxy)silane, and *N*-β-(carboxymethyl)aminoethyl-γ-aminopropyltrimethoxysilane;
vinyl-type unsaturated group-containing silanes such as vinyltrimethoxysilane, vinylmethyldimethoxysilane, and vinyltriethoxysilane;
(meth)acrylic-type unsaturated group-containing silanes such as γ-methacryloxypropylmethyldimethoxysilane, γ-methacryloxypropyltrimethoxysilane, γ-acryloxypropylmethyltriethoxysilane, and γ-acryloxypropyltrimethoxysilane;
reactive group-free silanes such as methyltrimethoxysilane, dimethyldimethoxysilane, *n*-propyltrimethoxysilane, phenyltrimethoxysilane, methylphenyldimethoxysilane, dimethoxydiphenylsilane, hexyltrimethoxysilane, 1,6-bis(trimethoxysilyl)hexane, (methoxymethyl)trimethoxysilane, and*p*-styryltrimethoxysilane;
halogen-containing silanes such as γ-chloropropyltrimethoxysilane; and
isocyanurate silanes such as tris(trimethoxysilyl)isocyanurate.

One silane compound (D) may be used alone, or two or more silane compounds (D) may be used in combination. Partial hydrolysis-condensation products of the above-mentioned silane compounds can also be used. Examples include Dynasylan 6490 and Dynasylan 6498 manufactured by Evonik.

To achieve good adhesion, the silane compound (D) is preferably γ-glycidoxypropyltrimethoxysilane, γ-glycidoxypropyltriethoxysilane, or γ-glycidoxypropylmethyldimethoxysilane.

To achieve good storage stability, the silane compound (D) is preferably vinyltrimethoxysilane, methyltrimethoxysilane, phenyltrimethoxysilane, or (methoxymethyl)trimethoxysilane, more preferably vinyltrimethoxysilane or (methoxymethyl)trimethoxysilane, and particularly preferably vinyltrimethoxysilane.

To further improve curability, the silane compound (D) is preferably a condensation product of a silane compound containing a hydrolyzable silicon group and a vinyl group. The "condensation product of a silane compound" refers to a silane oligomer formed by partial hydrolysis-condensation of the silane compound and containing a vinyl group. At least a portion of the silane compound used as the starting material may contain a vinyl group.

The amount of the silane compound (C) and the amount of the silane compound (D) are not limited to particular ranges, and may be set as appropriate depending on the desired properties of the silane compounds used. The amount of each of the silane compounds (C) and (D) is preferably from 0 to 20 parts by weight, more preferably from 0.1 to 10 parts by weight, and even more preferably from 1 to 8 parts by weight per 100 parts by weight of the organic polymer (A).

The curable composition according to the present disclosure may contain a relatively large amount of the silane compound (C) and/or the silane compound (D), which would cause reduced curability in conventional curable compositions. From this perspective, the amount of the silane compound (C) is preferably 3 parts by weight or more, more preferably 4 parts by weight or more, and even more preferably 5 parts by weight or more per 100 parts by weight of the organic polymer (A). The amount of the silane compound (D) is also preferably 3 parts by weight or more, more preferably 4 parts by weight or more, and even more preferably 5 parts by weight or more per 100 parts by weight of the organic polymer (A). Furthermore, the total amount of the silane compounds (C) and (D) is preferably from 5 to 20 parts by weight, more preferably from 6 to 15 parts by weight, and even more preferably from 7 to 12 parts by weight per 100 parts by weight of the organic polymer (A).

### (Method for Producing Curable Composition)

The curable composition according to the present disclosure can be produced by mixing the amidine structure-containing compound (b1), the titanium compound or condensation product thereof (b2), and the amino group-containing silane compound (b3) to prepare the catalyst-containing composition (B), subsequently adding the catalyst-containing composition (B) to the organic polymer (A), and mixing the two components (A) and (B). As a result of this procedure, the produced curable composition can exhibit improved curability.

The method for mixing the organic polymer (A) and the catalyst-containing composition (B) is not limited to a particular technique, and they may be mixed in any manner that enables uniform mixing. For example, the mixing can be performed using a conventionally known device. The temperature during mixing is not limited to a particular range, and may be room temperature. The catalyst-containing composition (B) may be a product produced by and purchased from a third party.

The mixing of the silane compound (C) and/or the silane compound (D) with the organic polymer (A) is not limited to a particular order. The catalyst-containing composition (B) and the silane compound (C) and/or the silane compound (D) may be added concurrently to the organic polymer (A), and these components may then be mixed together. Alternatively, the organic polymer (A) and the silane compound (C) and/or the silane compound (D) may be mixed first, and the catalyst-containing composition (B) may then be added to and mixed with the mixture of the components (A) and (C) and/or (D). Alternatively, the organic polymer (A) and the catalyst-containing composition (B) may be mixed first, and the silane compound (C) and/or the silane compound (D) may then be added to and mixed with the mixture of the components (A) and (B). The addition of the silane compound (C) and the silane compound (D) is not limited to a particular order either. The method and temperature of mixing may be as described above, and no particular limitations are imposed.

In addition, the mixing of additional components described below with the above components is not limited to a particular timing, and may be carried out in the same manner as the mixing of the silane compound (C) and/or the silane compound (D) with the components (A) and (B). Preferably, the organic polymer (A) is mixed first with the additional components, and the resulting mixture is then mixed with the catalyst-containing composition (B) and the silane compound (C) and/or the silane compound (D).

### (Additional Components)

The curable composition according to the present disclosure may, as necessary, contain a plasticizer, a filler, a property modifier, an anti-sagging agent (thixotropic agent), a stabilizer, and the like.

The curable composition according to the present disclosure may contain a plasticizer. The addition of a plasticizer allows for the adjustment of the viscosity and slump resistance of the curable composition, and the mechanical properties such as tensile strength and elongation of the cured product obtained by curing the curable composition. Specific examples of plasticizers include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate (a specific example is "EASTMAN 168" manufactured by EASTMAN CHEMICAL); non-phthalic ester compounds such as 1,2-cyclohexanedicarboxylic acid diisononyl ester (a specific example is "Hexamoll DINCH" manufactured by BASF); aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; phenyl alkylsulfonates (a specific example is "Mesamoll" manufactured by LANXESS); phosphoric ester compounds such as tricresyl phosphate and tributyl phosphate; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate. Among these, aliphatic carboxylic esters such as 1,2-cyclohexanedicarboxylic acid diisononyl ester are preferred because a cured product obtained from the curable composition prepared using an aliphatic carboxylic ester is likely to exhibit low water absorption.

A polymeric plasticizer may also be used. The use of a polymeric plasticizer enables initial physical properties to be maintained over a longer period of time than the use of a low-molecular-weight plasticizer that does not contain a polymer component in the molecule. In addition, the use of a polymeric plasticizer allows the cured product to exhibit improved drying properties (coatability) when an alkyd paint is applied to the cured product. Specific examples of polymeric plasticizers include, but are not limited to: vinyl polymers obtained by polymerizing vinyl monomers using various methods; polyalkylene glycol esters such as diethylene glycol dibenzoate, triethylene glycol dibenzoate, and pentaerythritol esters; polyester plasticizers obtained from a combination of a dibasic acid such as sebacic acid, adipic acid, azelaic acid, or phthalic acid and a dihydric alcohol such as ethylene glycol, diethylene glycol, triethylene glycol, propylene glycol, or dipropylene glycol; polyethers such as polyether polyols (e.g., polyethylene glycol, polypropylene glycol, and polytetramethylene glycol that have a number-average molecular weight of 500 or more or 1,000 or more) and derivatives resulting from conversion of the hydroxy groups of the polyether polyols into ester or ether groups; polystyrenes such as polystyrene and poly-α-methylstyrene; polybutadiene; polybutene; polyisobutylene; butadiene-acrylonitrile; and polychloroprene.

Among the polymeric plasticizers mentioned above, those compatible with the reactive silicon group-containing organic polymer (A) are preferred. In this regard, polyethers and vinyl polymers are preferred. In addition, polyethers are preferred in that the use of a polyether as a plasticizer can improve surface curability and depth curability and prevent delay in curing after storage. Among polyethers, polypropylene glycol is more preferred. In terms of compatibility, weather resistance, and heat resistance, vinyl polymers are preferred. More preferred vinyl polymers are acrylic polymers and/or methacrylic polymers, and acrylic polymers such as polyalkyl acrylates are even more preferred. The method used to synthesize such a polymer is preferably living radical polymerization and more preferably atom-transfer radical polymerization in order to enable the polymer to have a narrow molecular weight distribution and a low viscosity. It is preferable to use a polymer obtained by a method described in Japanese Laid-Open Patent Application Publication No. 2001-207157; this method is a so-called SGO process in which an alkyl acrylate monomer is subjected to continuous bulk polymerization at high temperature and high pressure.

The number-average molecular weight of the polymeric plasticizer is preferably from 500 to 15,000, more preferably from 800 to 10,000, even more preferably from 1,000 to 8,000, and particularly preferably from 1,000 to 5,000. Most preferably, the number-average molecular weight is from 1,000 to 3,000. If the molecular weight is excessively low, the plasticizer migrates over time due to heat or rain, and the initial physical properties cannot be maintained over a long period of time. If the molecular weight is excessively high, this leads to a high viscosity and poor workability.

The polymeric plasticizer is not limited to having a particular molecular weight distribution but preferably has a narrow molecular weight distribution. The dispersity of the polymeric plasticizer is preferably less than 1.80. The dispersity is more preferably 1.70 or less, even more preferably 1.60 or less, still more preferably 1.50 or less, particularly preferably 1.40 or less, and most preferably 1.30 or less.

The number-average molecular weight of the polymeric plasticizer is measured by GPC analysis when the polymeric plasticizer is a vinyl polymer and by end-group analysis when the polymeric plasticizer is a polyether polymer. The dispersity (Mw/Mn) is measured by GPC analysis (polystyrene-equivalent).

The polymeric plasticizer may or may not have reactive silicon groups. When the polymeric plasticizer has reactive silicon groups, it functions as a reactive plasticizer and can be prevented from migrating from the cured product. When the polymeric plasticizer has reactive silicon groups, the number of the reactive silicon groups is preferably 1 or less and more preferably 0.8 or less on average per molecule. When a reactive silicon group-containing plasticizer, in particular a reactive silicon group-containing polyether polymer, is used, its number-average molecular weight is desirably lower than that of the reactive silicon group-containing organic polymer (A).

The amount of the plasticizer is preferably from 5 to 150 parts by weight, more preferably from 10 to 120 parts by weight, and even more preferably from 20 to 100 parts by weight per 100 parts by weight of the reactive silicon group-containing organic polymer (A). When the amount of the plasticizer is within these ranges, the plasticizer can exhibit the desired effect without sacrificing the mechanical strength of the cured product. One plasticizer may be used alone, or two or more plasticizers may be used in combination. A low-molecular-weight plasticizer and a polymeric plasticizer may be used in combination. Plasticizers as described above can be added at the time of polymer production.

The curable composition according to the present disclosure may contain a filler. Examples of fillers include: reinforcing fillers such as fumed silica, precipitated silica, crystalline silica, fused silica, dolomite, silicic anhydride, hydrated silicic acid, and carbon black; fillers such as ground calcium carbonate, colloidal calcium carbonate, magnesium carbonate, diatomite, calcined clay, clay, talc, titanium oxide, bentonite, organic bentonite, ferric oxide, aluminum fines, flint powder, zinc oxide, active zinc oxide, and resin powders such as PVC powder and PMMA powder; and fibrous fillers such as asbestos and glass fibers or filaments. When a filler is used, the amount of the filler is preferably from 1 to 300 parts by weight and more preferably from 10 to 200 parts by weight per 100 parts by weight of the reactive silicon group-containing organic polymer (A).

When the use of a filler is intended to further enhance the strength of the cured product, it is preferable to select the filler mainly from fumed silica, precipitated silica, crystalline silica, fused silica, dolomite, silicic anhydride, hydrated silicic acid, carbon black, surface-treated fine calcium carbonate, calcined clay, clay, and active zinc oxide. The use of such a filler can provide a favorable result when its amount is from 1 to 200 parts by weight per 100 parts by weight of the reactive silicon group-containing organic polymer (A). When it is desired for the cured product to exhibit low strength and high elongation at break, the use of a filler selected mainly from titanium oxide, calcium carbonate, magnesium carbonate, talc, ferric oxide, zinc oxide, and Shirasu balloons can provide a favorable result when the amount of the filler is from 5 to 200 parts by weight per 100 parts by weight of the reactive silicon group-containing organic polymer (A).

The curable composition according to the present disclosure may contain hollow spheres such as balloons for the purpose of reducing the weight (or specific gravity) of the composition.

Balloons are hollow spherical fillers. Examples of the material of the balloons include inorganic materials such as glass, Shirasu, and silica, and organic materials such as phenol resin, urea resin, polystyrene, saran, and acrylonitrile. The material is not limited to those mentioned; an inorganic material and an organic material may be combined, or layers of different materials may be formed one around the other. Balloons made of an inorganic material, an organic material, or a combination of inorganic and organic materials, may be used. One type of balloons may be used, or two or more types of balloons made of different materials may be used as a mixture. The balloons used may have a processed or coated surface or may have a surface treated with any kind of surface treatment agent. For example, organic balloons may be coated with calcium carbonate, talc, or titanium oxide, or inorganic balloons may be surface-treated with a silane coupling agent.

The particle size of the balloons is preferably from 3 to 200 µm and particularly preferably from 10 to 110 µm. If the particle size is less than 3 µm, the balloons need to be added in large quantities since each balloon makes only a small contribution to weight reduction. If the particle size is 200 µm or more, the cured product produced as a sealing material tends to have a rough surface or low elongation.

The amount of the hollow spheres is preferably from 0.01 to 30 parts by weight per 100 parts by weight of the reactive silicon group-containing organic polymer (A). The amount of the hollow spheres is more preferably at least 0.1 parts by weight and up to 20 parts by weight. When the amount of the hollow spheres is within such a range, the use of the hollow spheres can lead to improved workability without sacrificing the elongation or strength at break of the cured product.

The curable composition according to the present disclosure may, as necessary, contain a property modifier for adjusting the tensile properties of the cured product. Examples of property modifiers include, but are not limited to: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-β-aminoethyl-γ-aminopropylmethyldimethoxysilane, γ-mercaptopropyltrimethoxysilane, and γ-mercaptopropylmethyldimethoxysilane; silicone varnishes; and polysiloxanes. The use of such a property modifier can increase the hardness of the cured product obtained by curing the curable composition, or conversely decrease the hardness of the cured product and increase the elongation at break of the cured product. One of the property modifiers mentioned above may be used alone, or two or more thereof may be used in combination.

In particular, a compound hydrolyzable to form a compound having a monovalent silanol group in the molecule can act to reduce the modulus of the cured product without exacerbating the surface tackiness of the cured product. Particularly preferred is a compound the hydrolysis of which yields trimethylsilanol. Examples of the compound hydrolyzable to form a compound having a monovalent silanol group in the molecule include compounds disclosed in Japanese Laid-Open Patent Application Publication No. H5-117521. Other examples include: silicon compounds that are derivatives of alkyl alcohols such as hexanol, octanol, and decanol and are hydrolyzable to form trialkyl silanols such as trimethylsilanol; and silicon compounds disclosed in Japanese Laid-Open Patent Application Publication No. H11-241029 which are derivatives of polyhydric alcohols having three or more hydroxy groups such as trimethylolpropane, glycerin, pentaerythritol, and sorbitol and which are hydrolyzable to form trialkyl silanols such as trimethylsilanol. Specific examples of such silicon compounds include phenoxytrimethylsilane and tris((trimethylsiloxy)methyl)propane.

Still other examples include silicon compounds disclosed in Japanese Laid-Open Patent Application Publication No. H7-258534 which are derivatives of oxyalkylene polymers and are hydrolyzable to form trialkyl silanols such as trimethylsilanol. A polymer described in Japanese Laid-Open Patent Application Publication No. H6-279693, which has a hydrolyzable silicon-containing group capable of crosslinking and a silicon-containing group hydrolyzable to form a monosilanol-containing compound, may also be used.

The property modifier is preferably used in an amount of 0.1 to 20 parts by weight, more preferably 0.5 to 10 parts by weight, per 100 parts by weight of the reactive silicon group-containing organic polymer (A).

The curable composition according to the present disclosure may, as necessary, contain an anti-sagging agent in order to prevent sagging and improve workability. Examples of anti-sagging agents include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The anti-sagging agent is preferably used in an amount of 0.1 to 20 parts by weight per 100 parts by weight of the reactive silicon group-containing organic polymer (A).

The curable composition according to the present disclosure may contain an antioxidant (anti-aging agent). The use of an antioxidant can enhance the weather resistance of the cured product. Examples of antioxidants include hindered phenol antioxidants, monophenol antioxidants, bisphenol antioxidants, and polyphenol antioxidants, and hindered phenol antioxidants are particularly preferred. Examples include: Irganox 245, Irganox 1010, Irganox 1035, Irganox 1076, Irganox 1135, Irganox 1330, and Irganox 1520 (all manufactured by BASF); SONGNOX 1076 (manufactured by SONGWON); and BHT. The following hindered amine light stabilizers may also be used: Tinuvin 622 LD, Tinuvin 144, Tinuvin 292, CHIMASSORB 944 LD, and CHIMASSORB 119 FL (all manufactured by BASF); ADK STAB LA-57, ADK STAB LA-62, ADK STAB LA-67, ADK STAB LA-63, and ADK STAB LA-68 (all manufactured by ADEKA Corporation); Sanol LS-2626, Sanol LS-1114, and Sanol LS-744 (all manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 may also be used. Specific examples of antioxidants are also disclosed in Japanese Laid-Open Patent Application Publication No. H4-283259 and Japanese Laid-Open Patent Application Publication No. H9-194731.

The amount of the antioxidant is preferably from 0.1 to 10 parts by weight and more preferably from 0.2 to 5 parts by weight per 100 parts by weight of the reactive silicon group-containing organic polymer (A).

The curable composition according to the present disclosure may contain a light stabilizer. The use of a light stabilizer can prevent photooxidative degradation of the cured product. Examples of light stabilizers include benzotriazole, hindered amine, and benzoate compounds. Particularly preferred are hindered amine compounds. Specific examples of light stabilizers are disclosed in Japanese Laid-Open Patent Application Publication No. H9-194731.

The amount of the light stabilizer is preferably from 0.1 to 10 parts by weight and more preferably from 0.2 to 5 parts by weight per 100 parts by weight of the reactive silicon group-containing organic polymer (A).

When a photocurable material is incorporated in the curable composition according to the present disclosure, especially when the photocurable material used is an unsaturated acrylic compound, it is preferable, as taught in Japanese Laid-Open Patent Application Publication No. H5-70531, to use a hindered amine light stabilizer, particularly a tertiary amine-containing hindered amine light stabilizer, in order to improve the storage stability of the composition. Examples of tertiary amine-containing hindered amine light stabilizers include: Tinuvin 123, Tinuvin 144, Tinuvin 249, Tinuvin 292, Tinuvin 312, Tinuvin 622 LD, Tinuvin 765, Tinuvin 770, Tinuvin 880, Tinuvin 5866, Tinuvin B97, CHIMASSORB 119 FL, and CHIMASSORB 944 LD (all manufactured by BASF); ADK STAB LA-57, LA-62, LA-63, LA-67, and LA-68 (all manufactured by ADEKA Corporation); Sanol LS-292, LS-2626, LS-765, LS-744, and LS-1114 (all manufactured by Sankyo Lifetech Co., Ltd.); SABOSTAB UV91, SABOSTAB UV119, SONGSORB CS5100, SONGSORB CS622, and SONGSORB CS944 (all manufactured by SONGWON); and Nocrac CD (manufactured by Ouchi Shinko Chemical Industrial Co., Ltd.).

The curable composition according to the present disclosure may contain an ultraviolet absorber. The use of an ultraviolet absorber can enhance the surface weather resistance of the cured product. Examples of ultraviolet absorbers include benzophenone, benzotriazole, salicylate, triazine, substituted acrylonitrile, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all manufactured by BASF); and SONGSORB 3290 (manufactured by SONGWON). Examples of triazine compounds include: Tinuvin 400, Tinuvin 405, Tinuvin 477, and Tinuvin 1577 ED (all manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber is preferably from 0.1 to 10 parts by weight and more preferably from 0.2 to 5 parts by weight per 100 parts by weight of the reactive silicon group-containing organic polymer (A). It is preferable to use a phenol or hindered phenol antioxidant, a hindered amine light stabilizer, and a benzotriazole ultraviolet absorber in combination.

Addworks IBC 760 (manufactured by Clariant), which is a mixture of an antioxidant, a light stabilizer, and an ultraviolet absorber, may also be used.

The curable composition according to the present disclosure may contain an epoxy resin. The composition containing an epoxy resin is particularly preferred as an adhesive, in particular an adhesive for exterior wall tiles. Examples of epoxy resins include bisphenol A epoxy resins and novolac epoxy resins.

The proportions of the organic polymer (A) and the epoxy resin are not limited to particular ranges. The weight ratio of the organic polymer (A) to the epoxy resin is preferably in the range of 100/1 to 1/100.

When the curable composition according to the present disclosure contains an epoxy resin, it is preferable to further use a curing agent for curing the epoxy resin. The epoxy resin-curing agent used is not limited to a particular material and may be a commonly used epoxy resin-curing agent. When an epoxy resin-curing agent is used, the amount of the curing agent is preferably from 0.1 to 300 parts by weight per 100 parts by weight of the epoxy resin.

The curable composition according to the present disclosure may, as necessary, contain various additives for the purpose of adjusting the physical properties of the curable composition or the cured product. Examples of additives include flame retardants, curability modifiers, radical inhibitors, metal deactivators, antiozonants, phosphorus-based peroxide decomposers, lubricants, pigments, blowing agents, solvents, and fungicides. Examples of flame retardants include aluminum hydroxide and magnesium hydroxide. These additives may be used alone or in combination of two or more. Specific examples of additives other than those mentioned herein are disclosed in publications such as Japanese Examined Patent Application Publication No. H4-69659, Japanese Examined Patent Application Publication No. H7-108928, Japanese Laid-Open Patent Application Publication No. S63-254149, Japanese Laid-Open Patent Application Publication No. S64-22904, and Japanese Laid-Open Patent Application Publication No. 2001-72854.

The curable composition according to the present disclosure can be prepared as a one-part curable composition in which all the components are blended together and hermetically stored and which cures under the action of atmospheric moisture after application. The curable composition may be prepared as a two-part curable composition consisting of a curing agent that is a blend of components such as a curing catalyst, a filler, a plasticizer, and water and a base material that contains the reactive silicon group-containing organic polymer (A). The base material and the curing agent are prepared separately from each other and mixed before use.

When the curable composition is a one-part composition, all of the components are blended together in advance. Thus, it is preferable that a water-containing component be dried to remove water before use or dehydrated by means such as pressure reduction during blending or kneading. When the curable composition is a two-part composition, there is no need to add any curing catalyst to the base material containing the reactive silicon group-containing organic polymer (A), and the composition has a low risk of gelation even if the curing agent blend contains some amount of water; however, the water-containing component is preferably dried or dehydrated when the composition is required to exhibit long-term storage stability. A suitable drying/dehydrating method for a solid component such as powder is thermal drying, while a suitable drying/dehydrating method for a liquid component is dehydration under reduced pressure or dehydration using synthetic zeolite, activated alumina, or silica gel. Alternatively, a small amount of an isocyanate compound may be added to allow the isocyanate groups to react with water, thereby achieving dehydration. The storage stability of the curable composition can be further improved by not only performing the drying/dehydration described above but also adding a lower alcohol such as methanol or ethanol or an alkoxysilane compound such as methyltrimethoxysilane, n-propyltrimethoxysilane, vinyltrimethoxysilane, vinylmethyldimethoxysilane, phenyltrimethoxysilane, γ-mercaptopropylmethyldimethoxysilane, γ-mercaptopropylmethyldiethoxysilane, or γ-glycidoxypropyltrimethoxysilane. A partially-condensed silane compound such as Dynasylan 6490 manufactured by Evonik is suitable for use as a dehydrating agent in terms of safety and stability.

The amount of the dehydrating agent, in particular a silicon compound such as vinyltrimethoxysilane which is reactive with water, is preferably from 0.1 to 20 parts by weight and more preferably from 0.5 to 10 parts by weight per 100 parts by weight of the reactive silicon group-containing organic polymer (A).

The curable composition according to the present disclosure can be used as an architectural sealing material, an industrial adhesive, a waterproof coating, or a material for a pressure-sensitive adhesive. The curable composition can also be used as a sealing agent for buildings, ships, automobiles, or roads. The curable composition can, either alone or with the help of a primer, adhere to a wide variety of substrates such as glass, porcelain, wood, metal, and molded resin articles, and can thus be used as any of various types of sealing compositions and adhesive compositions. The curable composition can be used not only as an ordinary adhesive but also as a contact adhesive. In addition, the curable composition is useful as a food packaging material, a casting rubber material, a mold-making material, or a paint.

In the following items, preferred aspects of the present disclosure are listed. The present invention is not limited to the following items.

### [Item 1]

A method for producing a curable composition containing an organic polymer (A), an amidine structure-containing compound (b1), a titanium compound or condensation product thereof (b2), and a silane compound (b3), wherein
the organic polymer (A) contains a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO-, the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the amidine structure-containing compound (b1) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the titanium compound (b2) is represented by the following formula (3): Ti(OR⁵)_{d}Y_{4-d} (3), wherein R⁵ is a substituted or unsubstituted hydrocarbon group having 1 to 20 carbon atoms, Y is a chelating ligand, and d is 0 or an integer from 1 to 4, and
the silane compound (b3) contains a hydrolyzable silicon group and an amino group and has a molecular weight of 100 to 1500,
the method including:
   a preparation step of preparing a catalyst-containing composition (B) by mixing the amidine structure-containing compound (b1), the titanium compound or condensation product thereof (b2), and the silane compound (b3); and
   a mixing step of mixing the organic polymer (A) and the catalyst-containing composition (B), wherein
   a weight ratio (b3)/(b2) of the silane compound (b3) to the titanium compound or condensation product thereof (b2) is from 0.1 to 2.

### [Item 2]

The method according to item 1, wherein a weight ratio (b2)/(b1) of the titanium compound or condensation product thereof (b2) to the amidine structure-containing compound (b1) is from 2.6 to 9.

### [Item 3]

The method according to item 1 or 2, wherein an amount of the amidine structure-containing compound (b1) is from 0.3 to 0.7 parts by weight per 100 parts by weight of the organic polymer (A).

### [Item 4]

The method according to any one of items 1 to 3, wherein the curable composition further contains a silane compound (D) containing a hydrolyzable silicon group, being free of an amino group, and having a molecular weight of 100 to 1500.

### [Item 5]

The method according to item 4, wherein the silane compound (D) is a condensation product of a silane compound containing a hydrolyzable silicon group and a vinyl group.

### [Item 6]

A curable composition containing an organic polymer (A) and a catalyst-containing composition (B), wherein
the organic polymer (A) contains a reactive silicon group represented by the formula (1),
the catalyst-containing composition (B) contains a composite of an amidine structure-containing compound (b1), a titanium compound or condensation product thereof (b2), and a silane compound (b3),
the amidine structure-containing compound (b1) is represented by the formula (2),
the titanium compound (b2) is represented by the formula (3),
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2.

### [Item 7]

A cured product obtained by curing the curable composition according to item 6.

### [Item 8]

A catalyst-containing composition (B) for an organic polymer (A) containing a reactive silicon group, the catalyst-containing composition (B) containing a composite of an amidine structure-containing compound (b1), a titanium compound or condensation product thereof (b2), and a silane compound (b3), wherein
the amidine structure-containing compound (b1) is represented by the formula (2),
the titanium compound (b2) is represented by the formula (3),
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2.

### Examples

The present invention will be described in greater detail below with reference to examples. It should be understood that the present invention is not limited to the examples described below.

The number-average molecular weights in the examples are GPC molecular weights measured under the following conditions.
Delivery system: HLC-8120 GPC, manufactured by Tosoh Corporation
Column: TSKgel SuperH series, manufactured by Tosoh Corporation
Solvent: THF
Molecular weight: Polystyrene-equivalent
Measurement temperature: 40 °C

In the examples, the average number of silyl groups per polymer end or per polymer molecule was calculated by H-NMR measurement (performed in a CDCl₃ solvent using AVANCE III HD-500 manufactured by Bruker).

### <Synthesis of Organic Polymer (A)>

### (Synthesis Example 1 (A-1))

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of 28,500. Subsequently, NaOMe dissolved in methanol was added in an amount of 1.2 molar equivalents per molar equivalent of the hydroxy groups of the hydroxy-terminated polypropylene oxide, and methanol was then distilled off. Allyl chloride was further added to convert the terminal hydroxy groups into allyl groups. Unreacted allyl chloride was removed by evaporation under reduced pressure. To 100 parts by weight of the resulting unpurified allyl-terminated polypropylene oxide were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, difunctional polypropylene oxide terminated with allyl groups and having a number-average molecular weight of about 28,500 was obtained. To 100 parts by weight of the obtained allyl-terminated polypropylene oxide was added 150 ppm of a 2-propanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and allowed to react at 90 °C for 5 hours to obtain trimethoxysilyl-terminated polyoxypropylene (A-1). The number of trimethoxysilyl groups was about 0.8 per polymer chain end.

The following compounds were used to produce composites.
TC-750: Titanium diisopropoxybis(ethyl acetoacetate) (manufactured by Matsumoto Fine Chemical Co., Ltd.)
Tyzor IBAY: Titanium diisobutoxybis(ethyl acetoacetate) (manufactured by Dorf Ketal)
Ti(OⁱPr)₄: Titanium tetraisopropoxide (manufactured by Tokyo Chemical Industry Co., Ltd.)
Ti(OBu)₄: Tetrabutoxytitanium (manufactured by Tokyo Chemical Industry Co., Ltd.)
Tyzor 9000: Titanium tetra(*tert*-butoxide) (manufactured by Dorf Ketal)
Hexabutoxy-µ-oxodititanium (manufactured by Tokyo Chemical Industry Co., Ltd.)
DBU: 1,8-Diazabicyclo[5.4.0]undec-7-ene (manufactured by Tokyo Chemical Industry Co., Ltd.)
Dynasylan AMMO (y-aminopropyltrimethoxysilane, manufactured by Evonik)
Dynasylan 1146 (condensation product of a diamino group-containing silane and an alkyl group-containing silane, manufactured by Evonik)

### <Production Example 1 (Reference Composite 1)>

An amount of 20 g of TC-750 was added to a 200-ml eggplant-shaped flask. While the contents of the flask were stirred, 0.1 g of DBU was slowly added dropwise to the flask. After completion of the dropwise addition, the flask was capped, and its contents were stirred at room temperature for 24 hours, yielding 20.1 g of Reference Composite 1 as a liquid.

### <Production Examples 2 to 17 (Reference Composites 2 to 17)>

Reference Composites 2 to 17 were obtained as liquids in the same manner as the reference composite of Production Example 1, except that the amidine compound (b1) and the titanium compound (b2) listed in Table 1 were used at the weight ratios shown in Table 1.

**[Table 1]**

| Reference composite of (b1) and (b2) | | Reference Composite 1 | Reference Composite 2 | Reference Composite 3 | Reference Composite 4 | Reference Composite 5 | Reference Composite 6 | Reference Composite 7 | Reference Composite 8 | Reference Composite 9 | Reference Composite 10 | Reference Composite 11 | Reference Composite 12 | Reference Composite 13 | Reference Composite 14 | Reference Composite 15 | Reference Composite 16 | Reference Composite 17 |
|---|---|---|---|---|---|---|---|---|---|---|---|---|---|---|---|---|---|---|
| Amidine compound (b1) | DBU | 0.1 | 0.2 | 0.3 | 0.4 | 0.5 | 0.6 | 0.7 | 0.8 | 0.9 | 1 | 0.5 | 0.5 | 0.5 | 0.5 | 1 | 1 | 1 |
| Titanium compound (b2) | TC-750 | 2 | 2 | 2 | 2 | 2 | 2 | 2 | 2 | 2 | 2 | | | | | 5 | | |
| | Tyzor IBAY | | | | | | | | | | | 2 | | | | | | |
| | Tyzor 9000 | | | | | | | | | | | | 2 | | | | | |
| | Ti(O*ⁱ* Pr)₄ | | | | | | | | | | | | | 2 | | | 2 | 5 |
| | Ti(OBu)₄ | | | | | | | | | | | | | | 2 | | | |
| Weight ratio (b2)/(bl) | | 20 | 10 | 6.67 | 5 | 4 | 3.33 | 2.86 | 2.5 | 2.2 | 2 | 4 | 4 | 4 | 4 | 5 | 2 | 5 |

### (Reference Examples 1 to 17)

### (Preparation of Base Material)

To 100 parts by weight of the reactive silicon group-containing organic polymer (A-1) were added colloidal calcium carbonate (Hakuenka CCR, manufactured by Shiraishi Kogyo Kaisha, Ltd.), ground calcium carbonate (Whiton SB, manufactured by Shiraishi Calcium Kaisha, Ltd.), a plasticizer (Hexamoll DINCH, manufactured by BASF), a pigment (Tipaque R820, manufactured by Ishihara Sangyo Kaisha, Ltd.), a thixotropic agent (Crayvallac SLT, manufactured by ARKEMA), an antioxidant (Irganox 1010, manufactured by BASF), an ultraviolet absorber (Tinuvin 326, manufactured by BASF), and a light stabilizer (Tinuvin 770, manufactured by BASF), the amounts (parts by weight) of which were as shown in Table 2. The polymer and the added components were mixed using a spatula, and the resulting mixture was passed through a three-roll mill three times to disperse the components. Thereafter, the mixture was dehydrated under reduced pressure using a planetary mixer. The resulting blend was placed in a moisture-proof cartridge as a base material.

### (Preparation of Curable Composition)

At 23 °C and 50% relative humidity, the base material was weighed out from the cartridge into plastic containers. Dynasylan VTMO (silane compound (D): vinyltrimethoxysilane, manufactured by Evonik) and Dynasylan AMMO (silane compound (C): γ-aminopropyltrimethoxysilane, manufactured by Evonik) were added in the amounts shown in Table 2, and mixed with the base material.

Subsequently, Reference Composites 1 to 17 prepared in Production Examples 1 to 17 were added as curing catalysts in the amounts shown in Table 2, and were mixed with the contents of the plastic containers to obtain curable compositions.

### (Evaluations)

### (Skinning Time (Curability))

Each of the obtained curable compositions was charged into a mold having a thickness of about 5 mm using a spatula, and the surface of the curable composition was leveled. The moment at which the surface leveling was completed was defined as the curing start point. The time taken for the composition to become tack-free when the surface of the composition was touched with the spatula was measured as the skinning time (curability). The measurement results are shown in Table 2.

### (Presence or Absence of Bleeding)

At a constant temperature of 23 °C and a constant relative humidity of 50% or 70%, each of the curable compositions was applied as a sheet onto a corrugated cardboard using a spatula, and the surface of the curable composition was smoothed. Subsequently, the curable composition was left at 23 °C and 50% or 70% relative humidity for 7 days, after which the surface of the composition was touched with a fingertip to determine whether a DBU-derived liquid compound had bled onto the surface of the cured product. The results are shown in Table 2.

**[Table 2]**

| | | | Reference Examples | | | | | | | | | | | | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 |
| Base material | Organic polymer (A) | (A-1) | 100 | 100 | 100 | 100 | 100 | 100 | 100 | 100 | 100 | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 | 160 | 160 | 160 | 160 | 160 | 160 | 160 | 160 | 160 |
| | Ground calcium carbonate | Whiton SB | 54 | 54 | 54 | 54 | 54 | 54 | 54 | 54 | 54 | 54 | 54 | 54 | 54 | 54 | 54 | 54 | 54 |
| | Plasticizer | DINCH | 90 | 90 | 90 | 90 | 90 | 90 | 90 | 90 | 90 | 90 | 90 | 90 | 90 | 90 | 90 | 90 | 90 |
| | Pigment | Tipaque R820 | 5 | 5 | 5 | 5 | 5 | 5 | 5 | 5 | 5 | 5 | 5 | 5 | 5 | 5 | 5 | 5 | 5 |
| | Thixotropic agent | Cryvallac SLT | 5 | 5 | 5 | 5 | 5 | 5 | 5 | 5 | 5 | 5 | 5 | 5 | 5 | 5 | 5 | 5 | 5 |
| | Antioxidant | Irganox 1010 | 1 | 1 | 1 | 1 | 1 | 1 | 1 | 1 | 1 | 1 | 1 | 1 | 1 | 1 | 1 | 1 | 1 |
| | Ultraviolet absorber | Tinuvin 326 | 1 | 1 | 1 | 1 | 1 | 1 | 1 | 1 | 1 | 1 | 1 | 1 | 1 | 1 | 1 | 1 | 1 |
| | Light stabilizer | Tinuvin 770 | 1 | 1 | 1 | 1 | 1 | 1 | 1 | 1 | 1 | 1 | 1 | 1 | 1 | 1 | 1 | 1 | 1 |
| | Adhesion promoter | Dynasylan AMMO | 3 | 3 | 3 | 3 | 3 | 3 | 3 | 3 | 3 | 3 | 3 | 3 | 3 | 3 | 3 | 3 | 3 |
| | Dehydrating agent | Dynasylan VTMO | 5 | 5 | 5 | 5 | 5 | 5 | 5 | 5 | 5 | 5 | 5 | 5 | 5 | 5 | 5 | 5 | 5 |
| Curing catalyst | Reference composite of (b1) and (b2) | Reference Composite 3 | 2.3 | | | | | | | | | | | | | | | | |
| | | Reference Composite 4 | | 2.4 | | | | | | | | | | | | | | | |
| | | Reference Composite 5 | | | 2.5 | | | | | | | | | | | | | | |
| | | Reference Composite 6 | | | | 2.6 | | | | | | | | | | | | | |
| | | Reference Composite 7 | | | | | 2.7 | | | | | | | | | | | | |
| | | Reference Composite 11 | | | | | | 2.5 | | | | | | | | | | | |
| | | Reference Composite 12 | | | | | | | 2.5 | | | | | | | | | | |
| | | Reference Composite 13 | | | | | | | | 2.5 | | | | | | | | | |
| | | Reference Composite 14 | | | | | | | | | 2.5 | | | | | | | | |
| | | Reference Composite 15 | | | | | | | | | | 6.0 | | | | | | | |
| | | Reference Composite 17 | | | | | | | | | | | 6.0 | | | | | | |
| | | Reference Composite 1 | | | | | | | | | | | | 2.1 | | | | | |
| | | Reference Composite 2 | | | | | | | | | | | | | 2.2 | | | | |
| | | Reference Composite 8 | | | | | | | | | | | | | | 2.8 | | | |
| | | Reference Composite 9 | | | | | | | | | | | | | | | 2.9 | | |
| | | Reference Composite 10 | | | | | | | | | | | | | | | | 3.0 | |
| | | Reference Composite 16 | | | | | | | | | | | | | | | | | 3.0 |
| Evaluations | Curability | Skinning time | 139 min | 87 min | 43 min | 31 min | 24 min | 46 min | 100 min | 95 min | 90 min | 14 min | 37 min | > 540 min | 290 min | 19 min | 16 min | 12 min | 24 min |
| | Presence or absence of bleeding | 23 °C, 50% RH × 7 days | Absent | Absent | Absent | Absent | Absent | Absent | Absent | Absent | Absent | Absent | Absent | Absent | Absent | Absent | Absent | Absent | Absent |
| | | 23 °C, 70% RH × 7 days | Absent | Absent | Absent | Absent | Absent | Absent | Absent | Absent | Absent | Absent | Absent | Absent | Absent | Present | Present | Present | Present |

### (Results)

In Reference Examples 1 to 17, Reference Composites each composed of the components (b1) and (b2) were used as curing catalysts. In Reference Examples 1 to 11, in which Reference Composites 3 to 7, 11 to 15, and 17 having a weight ratio (b2)/(b1) in the range of 2.6 to 9 were used, the curable compositions exhibited relatively good curability, and no bleeding was observed on the surfaces of the cured products. In contrast, in Reference Examples 12 and 13, in which Reference Composites 1 and 2 having a high weight ratio (b2)/(b1) of 9 or more were used, the curability was reduced, as demonstrated by the long skinning time. Furthermore, in Reference Examples 14 to 17, in which Reference Composites 8 to 10 and 16 having a low weight ratio (b2)/(bl) of 2.6 or less were used, bleeding occurred on the surfaces of the cured products under humid conditions.

### <Example 1 (Composite 18)>

An amount of 20 g of Ti(OⁱPr)₄ was added to a 200-ml eggplant-shaped flask. While the contents of the flask were stirred, 5 g of DBU was slowly added dropwise to the flask. Subsequently, 3 g of Dynasylan AMMO was slowly added dropwise to the flask. After heat generation had subsided, the flask was capped, and its contents were stirred at room temperature for 24 hours, yielding 28 g of Composite 18 as a liquid.

### <Examples 2 to 12 (Composites 19 to 29) and Comparative Example 1 (Comparative Composite 30)>

Composites 19 to 29 and Comparative Composite 30 were obtained as liquids in the same manner as the composite of Example 1, except that the amidine compound (b1), the titanium compound (b2), and the amino group-containing silane (b3) listed in Table 3 were used at the weight ratios shown in Table 3.

### (Evaluations)

### (Storage Stability)

After preparation of each composite, the composite was hermetically sealed in a transparent container. The composite was stored at a constant temperature of 23 °C and a constant relative humidity of 50% for 1 day or 30 days, after which the color of the composite was visually inspected. When the composite was colorless and transparent, a score of "1" was assigned. When the composite showed a pale yellow color, a score of "2" was assigned. When the composite showed a yellow color, a score of "3" was assigned. When the composite showed a red color, a score of "4" was assigned. A lower score indicates better stability, and a score of "3" is the upper limit of the acceptable range. The measurement results are shown in Table 3.

**[Table 3]**

| | | | Examples | | | | | | | | | | | | Comparative Examples | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 |
| Catalyst-containing composition (B) | Composite of (b1), (b2), and (b3) | | Composite 18 | Composite 19 | Composite 20 | Composite 21 | Composite 22 | Composite 23 | Composite 24 | Composite 25 | Composite 26 | Composite 27 | Composite 28 | Composite 29 | Comparative Composite 30 | Reference Composite 13 |
| | Amidine compound (b1) | DBU | 0.5 | 0.5 | 0.5 | 0.5 | 0.5 | 0.5 | 0.5 | 0.5 | 0.5 | 0.5 | 0.5 | 0.5 | 0.5 | 0.5 |
| | Titanium compound (b2) | Ti(O*ⁱ*Pr)₄ | 2 | 2 | 2 | 2 | 2 | | | | 2 | 2 | 2 | 2 | 2 | 2 |
| | | Tyzor 9000 | | | | | | 2 | | | | | | | | |
| | | Hexabutoxy-µ-oxodititanium(IV) | | | | | | | 2 | | | | | | | |
| | | Ti(OBu)₄ | | | | | | | | 2 | | | | | | |
| | Amino group-containing silane (b3) | Dynasylan AMMO | 0.3 | 0.5 | 1 | 1.5 | 2 | 0.5 | 0.5 | 0.5 | | | | | 0.1 | |
| | | Dynasylan 1146 | | | | | | | | | 0.5 | 1 | 1.5 | 2 | | |
| | Weight ratio (b3)/(b2) | | 0.15 | 0.25 | 0.5 | 0.75 | 1 | 0.25 | 0.25 | 0.25 | 0.25 | 0.5 | 0.75 | 1 | 0.05 | 0 |
| Storage stability | Coloring, 23 °C × 1 day | | 2 | 2 | 1 | 1 | 1 | 2 | 2 | 2 | 2 | 2 | 2 | 2 | 2 | 2 |
| | Coloring, 23 °C × 30 days | | 3 | 2 | 1 | 1 | 1 | 2 | 2 | 2 | 2 | 2 | 2 | 2 | 4 | 4 |

| | | | | | | | | | | | | | | | | |
|---|---|---|---|---|---|---|---|---|---|---|---|---|---|---|---|---|
| Evaluation criteria for coloring: "1" = Colorless and transparent, "2" = Pale yellow, "3" = Yellow, "4" = Red | | | | | | | | | | | | | | | | |

### (Results)

For Composites 18 to 29 (Examples 1 to 12), each composed of the amidine compound (b1), the titanium compound (b2), and the amino group-containing silane (b3), it can be seen that the weight ratio (b3)/(b2) was in the range of 0.1 to 2, and color darkening over time was suppressed. In contrast, for Comparative Composite 30 (Comparative Example 1), in which the amount of the amino group-containing silane (b3) was small and the weight ratio (b3)/(b2) was less than 0.1, and Reference Composite 13 (Comparative Example 2), in which the amino group-containing silane (b3) was not used, it can be seen that these composites underwent color darkening over time; specifically, the composites showed a pale yellow color after 1 day and showed a red color after 30 days.

### (Examples 13 to 27)

First, base materials were prepared in the same manner as in Reference Examples 1 to 17.

Subsequently, Dynasylan 6490 (a condensation product of a vinyltrimethoxysilane compound, manufactured by Evonik) serving as a silane compound (D), and Dynasylan AMMO, Dynasylan DAMO (2-aminoethyl-3-aminopropyltrimethoxysilane, manufactured by Evonik), or Dynasylan 1146 serving as a silane compound (C), were added to and mixed with the base materials in the amounts shown in Table 4.

Subsequently, Composites 19 to 22 prepared in Examples 2 to 5 or Composites 26 to 29 prepared in Examples 9 to 12 were added in the amounts shown in Table 4, and each of the resulting mixtures was placed in a moisture-proof cartridge. In this manner, one-part curable compositions were obtained.

Each curable composition was stored at 23 °C and 50% relative humidity for 7 days, after which the skinning time (curability) was measured and the presence or absence of bleeding was determined in the same manner as in Reference Examples 1 to 17. The measurement results are shown in Table 4.

**[Table 4]**

| | | | Examples | | | | | | | | | | | | | | |
|---|---|---|---|---|---|---|---|---|---|---|---|---|---|---|---|---|---|
| | | | 13 | 14 | 15 | 16 | 17 | 18 | 19 | 20 | 21 | 22 | 23 | 24 | 25 | 26 | 27 |
| Base material | Organic polymer (A) | (A-1) | 100 | 100 | 100 | 100 | 100 | 100 | 100 | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 | 160 | 160 | 160 | 160 | 160 | 160 | 160 |
| | Ground calcium carbonate | Whiton SB | 54 | 54 | 54 | 54 | 54 | 54 | 54 | 54 | 54 | 54 | 54 | 54 | 54 | 54 | 54 |
| | Plasticizer | DINCH | 90 | 90 | 90 | 90 | 90 | 90 | 90 | 90 | 90 | 90 | 90 | 90 | 90 | 90 | 90 |
| | Pigment | Tipaque R820 | 5 | 5 | 5 | 5 | 5 | 5 | 5 | 5 | 5 | 5 | 5 | 5 | 5 | 5 | 5 |
| | Thixotropic agent | Cryvallac SLT | 5 | 5 | 5 | 5 | 5 | 5 | 5 | 5 | 5 | 5 | 5 | 5 | 5 | 5 | 5 |
| | Antioxidant | Irganox 1010 | 1 | 1 | 1 | 1 | 1 | 1 | 1 | 1 | 1 | 1 | 1 | 1 | 1 | 1 | 1 |
| | Ultraviolet absorber | Tinuvin 326 | 1 | 1 | 1 | 1 | 1 | 1 | 1 | 1 | 1 | 1 | 1 | 1 | 1 | 1 | 1 |
| | Light stabilizer | Tinuvin 770 | 1 | 1 | 1 | 1 | 1 | 1 | 1 | 1 | 1 | 1 | 1 | 1 | 1 | 1 | 1 |
| | Adhesion promoter | Dynasylan AMMO | 3 | 3 | 3 | 3 | 3 | 3 | 3 | 3 | 3 | 3 | 3 | | | | |
| | | Dynasylan DAMO | | | | | | | | | | | | 3 | | 3 | |
| | | Dynasylan 1146 | | | | | | | | | | | | | 3 | | 3 |
| | Dehydrating agent | Dynasylan 6490 | 6 | 6 | 6 | 6 | 6 | 6 | 6 | 6 | 6 | 6 | 6 | 6 | 6 | 6 | 6 |
| Catalyst-containing composition (B) | Composite of (b1), (b2), and (b3) | Composite 19 | 3 | | | | | | | | | | | 3 | 3 | | |
| | | Composite 20 | | 3 | | | | | | | 2 | | | | | | |
| | | Composite 21 | | | 3 | | | | | | | 2 | | | | | |
| | | Composite 22 | | | | 3 | | | | | | | 2 | | | | |
| | | Composite 26 | | | | | 3 | | | | | | | | | 3 | 3 |
| | | Composite 27 | | | | | | 3 | | | | | | | | | |
| | | Composite 28 | | | | | | | 3 | | | | | | | | |
| | | Composite 29 | | | | | | | | 3 | | | | | | | |
| Evaluation results | Curability | Skinning time | 20 min | 26 min | 15 min | 38 min | 21 min | 29 min | 37 min | 43 min | 50 min | 24 min | 78 min | 34 min | 11 min | 34 min | 10 min |
| | Presence or absence of bleeding | 23 °C, 50% RH × 7 days | Absent | Absent | Absent | Absent | Absent | Absent | Absent | Absent | Absent | Absent | Absent | Absent | Absent | Absent | Absent |
| | | 23 °C, 70% RH ×7 days | Absent | Absent | Absent | Absent | Absent | Absent | Absent | Absent | Absent | Absent | Absent | Absent | Absent | Absent | Absent |

### (Results)

In Examples 13 to 27, in which composites each composed of the amidine compound (b1), the titanium compound (b2), and the amino group-containing silane (b3) and having a weight ratio (b3)/(b2) in the range of 0.1 to 2 were used, the curable compositions exhibited good curability, and no bleeding was observed on the surfaces of the cured products.

### <Examples 28 to 32 (Composites 31 to 35)>

Composites 31 to 35 were obtained as liquids in the same manner as the composite of Example 1, except that the amidine compound (b1), the titanium compound (b2), and the amino group-containing silane (b3) listed in Table 5 were used at the weight ratios shown in Table 5.

**[Table 5]**

| | | | Examples | | | | |
|---|---|---|---|---|---|---|---|
| | | | 28 | 29 | 30 | 31 | 32 |
| | Composite of (b1), (b2), and (b3) | | Composite 31 | Composite 32 | Composite 33 | Composite 34 | Composite 35 |
| | Amidine compound (b1) | DBU | 0.5 | 0.5 | 0.5 | 0.5 | 0.5 |
| | Titanium compound (b2) | Ti(O*ⁱ* Pr)₄ | 1 | | | | |
| Catalyst-containing composition (B) | | Tyzor 9000 | | 1 | | | |
| | | Hexabutoxy-µ-oxodititanium(IV) | | | 1 | | |
| | | Ti(OBu)₄ | | | | 1 | |
| | | TC-750 | 1 | 1 | 1 | 1 | 2 |
| | Amino group-containing silane (b3) | Dynasylan AMMO | 0.5 | 0.5 | 0.5 | 0.5 | 0.5 |
| | Weight ratio (b3)/(b2) | | 0.25 | 0.25 | 0.25 | 0.25 | 0.25 |

### (Examples 33 to 39)

To 100 parts by weight of the reactive silicon group-containing organic polymer (A-1) were added colloidal calcium carbonate (Hakuenka CCR), ground calcium carbonate (Whiton SB), a plasticizer (Hexamoll DINCH), a pigment (Tipaque R820), a thixotropic agent (Crayvallac SLT), an antioxidant (Irganox 1010), an ultraviolet absorber (Tinuvin 326), and a light stabilizer (Tinuvin 770), the amounts (parts by weight) of which were as shown in Table 6. The polymer and the added components were mixed using a spatula, and the resulting mixture was passed through a three-roll mill three times to disperse the components. Thereafter, the mixture was dehydrated under reduced pressure using a planetary mixer. After the mixture was cooled to 50 °C or lower, Dynasylan VTMO (vinyltrimethoxysilane, manufactured by Evonik) serving as a silane compound (D) and Dynasylan AMMO serving as a silane compound (C) were added to and mixed with the cooled mixture in the amounts shown in Table 6.

Subsequently, Composites 31 to 35 prepared in Examples 28 to 32, Composite 19 prepared in Example 2, or Composite 26 prepared in Example 9 were added in the amounts shown in Table 6, and each of the resulting mixtures was placed in a moisture-proof cartridge. In this manner, one-part curable compositions were obtained.

**[Table 6]**

| | | | Examples | | | | | | |
|---|---|---|---|---|---|---|---|---|---|
| | | | 33 | 34 | 35 | 36 | 37 | 38 | 39 |
| Base material | Organic polymer (A) | (A-1) | 100 | 100 | 100 | 100 | 100 | 100 | 100 |
| | Colloidal calcium carbonate | Hakuenka CCR | 160 | 160 | 160 | 160 | 160 | 160 | 160 |
| | Ground calcium carbonate | Whiton SB | 54 | 54 | 54 | 54 | 54 | 54 | 54 |
| | Plasticizer | DINCH | 90 | 90 | 90 | 90 | 90 | 90 | 90 |
| | Pigment | Tipaque R820 | 5 | 5 | 5 | 5 | 5 | 5 | 5 |
| | Thixotropic agent | Cryvallac SLT | 5 | 5 | 5 | 5 | 5 | 5 | 5 |
| | Antioxidant | Irganox 1010 | 1 | 1 | 1 | 1 | 1 | 1 | 1 |
| | Ultraviolet absorber | Tinuvin 326 | 1 | 1 | 1 | 1 | 1 | 1 | 1 |
| | Light stabilizer | Tinuvin 770 | 1 | 1 | 1 | 1 | 1 | 1 | 1 |
| | Adhesion promoter | Dynasylan AMMO | 3 | 3 | 3 | 3 | 3 | 3 | 3 |
| | Dehydrating agent | Dynasylan VTMO | 5 | 5 | 5 | 5 | 5 | 5 | 5 |
| Catalyst-containing composition (B) | Composite of (b1), (b2), and (b3) | Composite 31 | 3 | | | | | | |
| | | Composite 32 | | 3 | | | | | |
| | | Composite 33 | | | 3 | | | | |
| | | Composite 34 | | | | 3 | | | |
| | | Composite 35 | | | | | 3 | | |
| | | Composite 19 | | | | | | 3 | |
| | | Composite 26 | | | | | | | 3 |
| Evaluation results | Curability | Skinning time before storage | 43 min | 46 min | 47 min | 47 min | 26 min | 77 min | 102 min |
| | | Skinning time after storage | 32 min | 32 min | 30 min | 34 min | 23 min | 66 min | 92 min |
| | Presence or absence of bleeding | 23 °C, 50% RH × 7 days | Absent | Absent | Absent | Absent | Absent | Absent | Absent |
| | | 23 °C, 70% RH × 7 days | Absent | Absent | Absent | Absent | Absent | Absent | Absent |
| | Adhesion | Glass sheet | CF | CF | CF | CF | CF | CF | CF |
| | | Anodized aluminum sheet | CF | CF | CF | CF | CF | CF | CF |
| | | Stainless steel sheet | CF | CF | CF | CF | CF | CF | CF |
| | | Polyvinyl chloride sheet | CF | CF | CF | CF | CF | CF | CF |
| | | Polyacrylic sheet | CF | CF | CF | CF | CF | CF | CF |
| | | FRP sheet | CF | CF | CF | CF | CF | CF | CF |
| | | Beech wood | CF | CF | CF | CF | CF | CF | CF |
| | | Mortar | CF | CF | CF | CF | CF | CF | CF |
| | Dumbbell tensile properties | Modulus at 50% elongation (MPa) | 0.34 | 0.32 | 0.32 | 0.31 | 0.26 | 0.37 | 0.39 |
| | | Modulus at 100% elongation (MPa) | 0.55 | 0.56 | 0.56 | 0.53 | 0.46 | 0.65 | 0.65 |
| | | Tensile strength at break (MPa) | 1.84 | 1.74 | 1.76 | 1.71 | 1.86 | 1.89 | 1.78 |
| | | Elongation at break (%) | 680 | 660 | 644 | 658 | 859 | 556 | 540 |

### (Evaluations)

### (Skinning Time (Curability))

Each curable composition was stored at 23 °C and 50% relative humidity for 7 days. Thereafter, the skinning time (curability) was measured by the method described above. The results are shown as "Skinning time before storage" in Table 6.

Furthermore, after storage at 23 °C for 7 days, the curable composition was further stored at 50 °C for 28 days and then at 23 °C for 1 day. Thereafter, the skinning time (curability) was measured by the method described above. The results are shown as "Skinning time after storage" in Table 6.

The curable compositions of Examples 33 to 39, each of which contained the organic polymer (A) and the corresponding composite, exhibited good curability both before and after storage. No substantial delay in curing due to storage occurred, which demonstrated that the composites exhibited good storage stability.

### (Presence or Absence of Bleeding)

At a constant temperature of 23 °C and a constant relative humidity of 50% or 70%, each curable composition was applied as a sheet onto a corrugated cardboard using a spatula, and the surface of the curable composition was smoothed. Subsequently, the curable composition was left at 23 °C and 50% or 70% relative humidity for 7 days, after which the surface of the composition was touched with a fingertip to determine whether a DBU-derived liquid compound had bled onto the surface of the cured product. The results are shown in Table 6.

No bleeding of the liquid compound was observed on the surfaces of all the cured products formed by curing the curable compositions of Examples 33 to 39 each of which contained the organic polymer (A) and the corresponding composite.

### (Adhesion)

Each curable composition was applied to the surfaces of various substrates listed in Table 6, and the applied composition was cured at a constant temperature of 23 °C and a constant relative humidity of 50% for 7 days. The resulting cured product was subjected to a 90° hand peel test, and the mode of failure was evaluated by visual inspection. The mode of failure was classified as cohesive failure (CF) when failure occurred within the cured product and as adhesive failure (AF) when peeling occurred at the interface between the cured product and the substrate. The results are shown in Table 6.

The curable compositions of Examples 33 to 39, each of which contained the organic polymer (A) and the corresponding composite, all exhibited good adhesion to the various substrates.

### (Dumbbell Tensile Properties)

Each curable composition was charged into a sheet-shaped mold having a thickness of 3 mm at a constant temperature of 23 °C and a constant relative humidity of 50%. The composition was cured at 23 °C and 50% RH for 3 days and then aged in a dryer at 50 °C for 4 days, yielding a sheet-shaped cured product.

The resulting cured product was tested in accordance with JIS K 6251. Specifically, the cured product was punched to prepare a No. 3 dumbbell-shaped specimen, and the specimen was subjected to tensile testing using an Autograph (tensile speed: 200 mm/min) to measure modulus at 50% elongation, modulus at 100% elongation, tensile strength at break, and elongation at break. The results are shown in Table 6.

The cured products formed by curing the curable compositions of Examples 33 to 39, each of which contained the organic polymer (A) and the corresponding composite, all exhibited good tensile properties.

## Claims

1. A method for producing a curable composition containing an organic polymer (A), an amidine structure-containing compound (b1), a titanium compound or condensation product thereof (b2), and a silane compound (b3), wherein
the organic polymer (A) contains a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO-, the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the amidine structure-containing compound (b1) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the titanium compound (b2) is represented by the following formula (3): Ti(OR⁵)_{d}Y_{4-d} (3), wherein R⁵ is a substituted or unsubstituted hydrocarbon group having 1 to 20 carbon atoms, Y is a chelating ligand, and d is 0 or an integer from 1 to 4, and
the silane compound (b3) contains a hydrolyzable silicon group and an amino group and has a molecular weight of 100 to 1500,
the method comprising:
a preparation step of preparing a catalyst-containing composition (B) by mixing the amidine structure-containing compound (b1), the titanium compound or condensation product thereof (b2), and the silane compound (b3); and
a mixing step of mixing the organic polymer (A) and the catalyst-containing composition (B), wherein
a weight ratio (b3)/(b2) of the silane compound (b3) to the titanium compound or condensation product thereof (b2) is from 0.1 to 2.

2. The method according to claim 1, wherein a weight ratio (b2)/(b1) of the titanium compound or condensation product thereof (b2) to the amidine structure-containing compound (b1) is from 2.6 to 9.

3. The method according to claim 1 or 2, wherein an amount of the amidine structure-containing compound (b1) is from 0.3 to 0.7 parts by weight per 100 parts by weight of the organic polymer (A).

4. The method according to claim 1 or 2, wherein the curable composition further contains a silane compound (D) containing a hydrolyzable silicon group, being free of an amino group, and having a molecular weight of 100 to 1500.

5. The method according to claim 4, wherein the silane compound (D) is a condensation product of a silane compound containing a hydrolyzable silicon group and a vinyl group.

6. A curable composition comprising an organic polymer (A) and a catalyst-containing composition (B), wherein
the organic polymer (A) contains a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO-, the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the catalyst-containing composition (B) comprises a composite of an amidine structure-containing compound (b1), a titanium compound or condensation product thereof (b2), and a silane compound (b3),
the amidine structure-containing compound (b1) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the titanium compound (b2) is represented by the following formula (3): Ti(OR⁵)_{d}Y_{4-d} (3), wherein R⁵ is a substituted or unsubstituted hydrocarbon group having 1 to 20 carbon atoms, Y is a chelating ligand, and d is 0 or an integer from 1 to 4,
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2.

7. A cured product obtained by curing the curable composition according to claim 6.

8. A catalyst-containing composition (B) for an organic polymer (A) containing a reactive silicon group, the catalyst-containing composition (B) comprising a composite of an amidine structure-containing compound (b1), a titanium compound or condensation product thereof (b2), and a silane compound (b3), wherein
the amidine structure-containing compound (b1) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the titanium compound (b2) is represented by the following formula (3): Ti(OR⁵)_{d}Y_{4-d} (3), wherein R⁵ is a substituted or unsubstituted hydrocarbon group having 1 to 20 carbon atoms, Y is a chelating ligand, and d is 0 or an integer from 1 to 4,
the silane compound (b3) contains a hydrolyzable silicon group and an amino group and has a molecular weight of 100 to 1500, and
a weight ratio (b3)/(b2) of the silane compound (b3) to the titanium compound or condensation product thereof (b2) is from 0.1 to 2.
